(19) **Europäisches Patentamt**
**European Patent Office**
**Office européen des brevets**

(11) **EP 2 442 258 B1**

(12) **EUROPEAN PATENT SPECIFICATION**

(45) Date of publication and mention
of the grant of the patent:
**05.12.2018 Bulletin 2018/49**

(51) Int Cl.:
**G06K 9/62** *(2006.01)*

(21) Application number: **10187899.9**

(22) Date of filing: **18.10.2010**

(54) **Method of generating a classification data base for classifying a traffic sign and device and method for classifying a traffic sign**

Verfahren zur Erzeugung einer Klassifizierungsdatenbank zum Klassifizieren eines Verkehrsschildes und Vorrichtung und Verfahren zur Klassifizierung eines Verkehrsschildes

Procédé pour générer une classification de base de données pour classer un panneau de signalisation routière et dispositif et procédé pour classer un panneau de signalisation routière

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**18.04.2012 Bulletin 2012/16**

(73) Proprietor: **Harman Becker Automotive Systems GmbH**
**76307 Karlsbad (DE)**

(72) Inventors:
• **Natroshvili, Koba**
**76337, Waldbronn (DE)**
• **Mani, Ayyappan**
**76131, Karlsruhe (DE)**

(74) Representative: **Bertsch, Florian Oliver et al**
**Kraus & Weisert**
**Patentanwälte PartGmbB**
**Thomas-Wimmer-Ring 15**
**80539 München (DE)**

(56) References cited:
**US-A- 6 134 344**

• **KOBA NATROSHVILI ET AL: "Real time pedestrian detection by fusing PMD and CMOS cameras", INTELLIGENT VEHICLES SYMPOSIUM, 2008 IEEE, IEEE, PISCATAWAY, NJ, USA, 4 June 2008 (2008-06-04), pages 925-929, XP031318792, ISBN: 978-1-4244-2568-6**
• **BURGES C J C: "Simplified support vector decision rules", MACHINE LEARNING. PROCEEDINGS OF THE INTERNATIONAL CONFERENCE, XX, XX, 3 July 1996 (1996-07-03), pages 71-77, XP002087853,**
• **Schölkopf B. and Smola A.J.: "Learning with Kernels - Support Vector Machines, Regularization, Optimization, and Beyond", 2002, MIT press, XP002628297, * page 543 - page 566 ***
• **KIRAN, C.G.; PRABHU, L.V.; ABDU, R.V.; RAJEEV, K.: "Traffic Sign Detection and Pattern Recognition using Support Vector Machine", SEVENTH INTERNATIONAL CONFERENCE ON ADVANCES IN PATTERN RECOGNITION, 2009. ICAPR '09., 4 February 2009 (2009-02-04), pages 87-90, XP002628298,**
• **MIN SHI ET AL: "Support vector machines for traffic signs recognition", NEURAL NETWORKS, 2008. IJCNN 2008. (IEEE WORLD CONGRESS ON COMPUTATIONAL INTELLIGENCE). IEEE INTERNATIONAL JOINT CONFERENCE ON, IEEE, PISCATAWAY, NJ, USA, 1 June 2008 (2008-06-01), pages 3820-3827, XP031328083, ISBN: 978-1-4244-1820-6**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The invention relates to a method of and a device for classifying a traffic sign, and to a method of generating a classification data base which can be used in such a classification device or classification method. In particular, the invention relates to methods and device which allow a traffic sign to be classified into one of plural classes.

BACKGROUND OF THE INVENTION

Contemporary vehicles are equipped with various different sensors. Vehicle sensors include sensors for detecting variables that are related to the status of the vehicle itself, as well as sensors for detecting variables of the environment of the vehicle. Sensors of the second type include temperature sensors, distance sensors and, more recently, also one or several cameras.

A vehicle can be equipped with a single camera or a plurality of cameras mounted at different positions and configured to monitor the environment of the vehicle. Such cameras may be specifically designed to capture images of a certain sector of a vehicle's environment. Data obtained from the camera(s) are employed for a variety of purposes. A basic class of functions, for which image data captured by a camera may be employed, is the field of driver assistance systems. Driver assistance systems cover a large range of functions. Systems exist that provide a driver with particular information, for example a warning in the case of possible emergency situations inside or outside the vehicle. Other driver assistance systems further enhance a driver's comfort by interfering with or partly taking over control functions in complicated or critical driving situations. Examples for the latter class of driver assistance systems are antilock brake systems (ABS), traction control systems (PCS), and electronic stability programs (ESP). Further systems include adaptive cruise control, intelligent speed adaptation and predictive safety systems.

Some functions in Advanced Driver Assistance Systems (ADAS) may be based on an automatic recognition of traffic signs, which allows a traffic sign represented by image data to be automatically recognized. For illustration, based on the information available from speed limit signs and end-of-restriction signs, additional support functions could be provided to enhance the driver's comfort. Such support functions may include the outputting of a warning when a speed limit violation occurs, implementing automatic adjustments to vehicle setting responsive to the detected speed limit or other assistance functions. While information on traffic signs may be included in digital map data stored onboard a vehicle, frequent updates of the map data may be required to keep the traffic sign information up to date. Further, such information on traffic signs may not be adapted to accommodate traffic signs that are set up only for a limited period of time, e.g. in the case of road construction work. Therefore, the provision of digital map data which includes information on traffic signs does not obviate the need for methods and devices for classifying traffic signs. Furthermore, if the digital map data are generated at least partially based on recorded video images or similar, traffic sign classification may need to be performed in the process of generating the digital map data.

Methods for recognizing traffic signs may employ, for example, classification methods based on an Adaboost algorithm, neural networks or support vector machines (SVM). While classification may lead to a full identification of the traffic sign, classification may also be implemented such that it established whether a traffic sign belongs to one of several classes of traffic signs

Conventional approaches which are based on a SVM utilize a set of support vectors. Each one of the support vectors is a vector in an M-dimensional space in which feature vectors are defined. Conventional approaches for image recognition utilize a rather large number of support vectors, which will typically be much greater than M in order to attain an acceptable rate of correct classifications. Reducing the number of support vectors to on the order of M will typically give rise to an unacceptable fail rate in a conventional SVM. On the other hand, with increasing number of support vectors, not only the training time, but also the detection time becomes large.

Kiran, C.G., Prabhu, L.V., Abdu, R.V., and Rajeev, K.: "Traffic Sign Detection and Pattern Recognition using Support Vector Machine", Seventh International Conference on Advances in Pattern Recognition, 2009. ICAPR '09, pages 87-90; and Min Shi et al.: "Support vector machines for traffic signs recognition", Neural Networks, 2008. IJCNN 2008. (IEEE World Congress on Computational Intelligence). IEEE, PISCATAWAY, NJ, USA, pages 3820-3827 describe examples for traffic sign classification using SVMs and serve as basis for the preamble of the independent claims.

Natroshvili K. et al.: "Real time pedestrian detection by fusing PMD and CMOS cameras", Intelligent Vehicles Symposium, 2008 IEEE, IEEE, PISCATAWAY, NJ, USA, pages 925-929 describes pedestrian detection techniques. A reduced set of vectors is generated from a set of support vectors of a SVM. The data captured by a PMD sensor may be used to generate an object list.

US 6,134,344 and Burges C.J.C.: "Simplified support vector decision rules", Machine Learning. Proceedings of the International Conference. 3 July 1996 (1996-07-03), pages 71-77, respectively describe techniques in which a symmetric matrix is generated from the support vectors of a SVM and a reduced set of vectors is identified by computing the eigenvectors of the symmetric matrix. Schölkopf B. and Smola A.J.: "Learning with Kernels - Support Vector Machines, Regularization, Optimization, and Beyond", 2002, MIT press, pages 546-566 describes further examples of SVM in which a reduced vector set is determined.

For some functions in ADAS that rely on the automatic classification of traffic signs, the time required for classifying a traffic sign may be critical. Further, for some functions in ADAS that rely on the automatic recognition of traffic signs, false positive detections, i.e. classifications in which a traffic sign is incorrectly classified as belonging to a given class of traffic signs, should be low.

There is a need in the art for improved methods and devices for classifying a traffic sign, and for improved methods of producing a data base which may be used in such classification methods and devices. In particular, there is a need in the art for a method and device for classifying a traffic sign, which is configured to reduce the computation time required for classification as compared to a conventional SVM, while having a performance comparable to the one of the conventional SVM. There is further a need in the art for such a method for generating a data base for use in such methods and devices, in which the data base may be generated starting from the parameters of a trained SVM.

Summary

According to embodiments, this need is addressed by a method of generating a classification data base and a device and method for classifying a traffic sign as defined in the independent claims. The dependent claims define embodiments.

According to an aspect of the invention, a method of generating a classification data base for classifying a traffic sign into one of a plurality of classes is provided. In the method, a parameter set of a trained support vector machine (SVM) is retrieved. The retrieved parameter set includes a plurality of support vectors and a plurality of weighting factors. Each one of the support vectors belongs to one of the plurality of classes. Each one of the weighting factors is associated with one of the support vectors. A symmetric or hermitian matrix is generated based on the retrieved parameter set, such that the symmetric or hermitian matrix has a number of rows and number of columns which is respectively smaller than a number, N, of the plurality of support vectors. Several matrix elements of the matrix are respectively computed as a function of the parameter set of the SVM. Eigenvectors of the symmetric or hermitian matrix are determined. At least a sub set of the plurality of eigenvectors is stored in the classification data base.

In the method, the information included in the parameter set of the trained SVM is used to determine another vector set, i.e., the eigenvectors of the generated matrix. The number of these eigenvectors is less than, and may be much less than, the number N of support vectors. Surprisingly, it has been found that the symmetric or hermitian matrix may be generated such that the eigenspectrum of the matrix includes the information required to perform traffic sign classification with a speed which may be considerably faster than the speed obtained with the original SVM, while having an error rate comparable to that of the original SVM.

In order to generate the matrix, a weighted sum of products of vector components $X_{i,u} \cdot X_{i,v}$ over several support vectors $\vec{X}_i$ may be computed. Here, i denotes a support vector label, u and v are integers with u, v > o and u, v being smaller than or equal to the dimension of the vector space in which the support vectors are defined (i.e., less than or equal to the number of components of the support vectors). $X_{i,u}$ denotes the $u^{th}$ component of the $i^{th}$ support vector $\vec{X}_i$, and $X_{i,v}$ denotes the $v^{th}$ component of the $i^{th}$ support vector $\vec{X}_i$. The weighting factors used to compute the weighted sum may depend on the weighting factors included in the parameter set of the SVM.

Each one of the plurality of support vectors may have M vector components, with M being less than N. The matrix may be generated to have M rows and M columns. This allows the matrix to be generated such that its number of eigenvectors is limited from above by the number of vector components of the support vectors. The number N of support vectors may be much greater than M, i.e. N >> M. Nevertheless, the information included in the original trained SVM may be condensed into the eigenvectors of the symmetric matrix.

M orthogonal eigenvectors of the matrix may be determined. These eigenvectors span the space of M-dimensional feature vectors which are used to classify the traffic sign. Additionally, the eigenvalues associated with the plurality of eigenvectors of the symmetric matrix may be determined. At least a sub set of the eigenvalues, or a quantity derived therefrom, may be stored in the classification data base.

The matrix may have matrix elements $S_{uv}$ with integer u>0 and v>0. For a plurality of the matrix elements, the matrix element $S_{uv}$ may be computed according to

$$S_{uv} = \sum_{i=1}^{N} w_i \cdot X_{i,u} \cdot X_{i,v} , \qquad (1)$$

with i being a support vector label. In the above equation, for all i, $w_i$ is a function of the retrieved weighting factor associated with the $i^{th}$ support vector $\vec{X}_i$, $X_{i,u}$ is the $u^{th}$ component of the $i^{th}$ support vector $\vec{X}_i$, and $X_{i,v}$ is the $v^{th}$ component of the $i^{th}$ support vector $\vec{X}_i$. The eigenvectors of such a matrix can be used to attain a classification performance which, for certain decision function kernels, in particular for homogeneous polynomial kernels, has a fail rate comparable to that of the original trained SVM, but allows the classification to be performed more rapidly. For a quadratic kernel, classification performed using the eigenvectors may have a performance, in terms correct classifications, equal to that of the original trained SVM.

To generate the matrix, the quantity

$$\sum_{i=1}^{N} w_i \cdot \vec{X}_i \cdot \vec{X}_i^T , \qquad (2)$$

may be computed. In the above formula, i is a support vector label, and, for all i, $w_i$ is a function of the retrieved weighting factor associated with the $i^{th}$ support vector $\vec{X}_i$, $\vec{X}_i$ is the $i^{th}$ support vector in column vector form and $\vec{X}_i^T$ is the $i^{th}$ support vector in row vector form. It will be appreciated that, when M denotes the number of vector components of each support vector, the above formula yields a symmetrical $M \times M$-matrix. The eigenvectors of such a matrix can be used to attain a classification performance which, for certain decision function kernels, in particular for homogeneous polynomial kernels, has a fail rate comparable to that of the original trained SVM, but allows the classification to be performed more rapidly. Additional operations may be performed to generate the symmetrical matrix which is diagonalized, such as adding another $M \times M$-matrix proportional to a unity matrix to the matrix computed by evaluating the above formula.

The factors wi in formulae (1) and (2) may be given by

$$w_i = \alpha_i \cdot y_i, \qquad (3)$$

where, for all i, $\alpha_i$ is the weighting factor associated with the $i^{th}$ support vector $\vec{X}_i$, $y_i$ is set to have a first value if the $i^{th}$ support vector belongs to a selected class of the plurality of classes and yi is set to have a second value if the $i^{th}$ support vector does not belong to the selected class of the plurality of classes. The new set of vectors, i.e., the eigenvectors of the symmetric matrix may therefore be tailored for detecting whether or not a traffic sign belongs to a particular one of multiple classes. The first and second values may be arbitrary real values, such as 1 and -1, 1 and 0, etc. The person skilled in the art of automated vision will appreciate that various such values re employed in conventional SVMs and may similarly be used in the method of various embodiments.

In the method, the classification data base may be generated so as to accommodate multi class classification. To this end, the generation of a symmetric matrix, determining of eigenvectors of the symmetric matrix and storing at least a sub set of the plurality of eigenvectors may be repeated plural times. When the matrix is generated according to one of Equations (1) or (2) with the $w_i$ given in Equation (3), a change in the selected class will result in a new symmetric matrix and, thus, new eigenspectrum.

When the plurality of classes comprises at least three different classes, the method may comprise generating a further symmetric matrix. To generate the further matrix, the quantity

$$\sum_{i=1}^{N} \alpha_i \cdot y_i^{(II)} \cdot \vec{X}_i \cdot \vec{X}_i^T , \qquad (4)$$

may be computed. In the above formula, i is a support vector label, and, for all i, $w_i$ is a function of the retrieved weighting factor associated with the $i^{th}$ support vector $\vec{X}_i$, $\vec{X}_i$ is the $i^{th}$ support vector in column vector form and $\vec{X}_i^T$ is the $i^{th}$ support vector in row vector form. For all i, $\alpha_i$ is the weighting factor associated with the $i^{th}$ support vector $\vec{X}_i$, $y_i^{(II)}$ is set to have the first value if the $i^{th}$ support vector belongs to a further selected class of the plurality of classes, the further selected class being different from the selected class, and $y_i^{(\text{II})}$ is set to have the second value if the $i^{\text{th}}$ support vector does not belong to the further selected class of the plurality of classes.

The classification speed of a classification performed using the classification data base is further enhanced by storing only a sub set of the eigenvectors in the classification data base for use in traffic sign classification. To this end, only a part of the eigenvectors having the largest eigenvalues is selected for storing in the classification data base. The number of eigenvectors which is to be stored in the classification data base is selected by testing operation of a classification performed using the sub set of eigenvectors against a desired performance criterion. The performance criterion may be user specified.

To select a sub set of the eigenvectors for storing in the classification data base, a target reliability information may be received, e.g., from a user input device. A test classification may be performed on the plurality of support vectors of the original trained SVM, using a sample set of the eigenvectors which includes a sub set of the eigenvectors selected based on their associated eigenvalues. A success or failure rate of the test classification may be determined (e.g., the rate of correct classifications). The determined success rate may be compared to the target reliability information. The sample set of eigenvectors may be selectively changed and the test classification may be repeated, depending on the comparison of the success rate with the target reliability information.

The method of any one of the embodiments described above may further include storing the eigenvalues associated with at least the sub set of eigenvectors, or values determined based on these eigenvalues, in the classification data base.

The method of any one of the embodiments described above may further include storing an additive offset value of the parameter set of the trained SVM in the classification data base.

The method of any one of the embodiments described above may further include training the SVM on images of traffic signs, each one of the traffic signs belonging to one of the plurality of classes, and generating the parameter set of the trained SVM.

According to another aspect of the invention, a computer program product is provided which has stored thereon instructions which, when executed by a processor of an electronic device, direct the electronic device to perform the method of generating a classification data base according to any one aspect or embodiment. The computer program product may comprise a storage medium on which the instructions are stored. The storage medium may be selected from a group comprising a removable storage medium, such as a CD-ROM, a CD-R/W, a DVD, a persistent memory, a Flash-memory, a semiconductor memory, and a hard drive memory. The storage medium may be non-transient.

According to another aspect of the invention, a device for classifying a traffic sign is provided. The device comprises a processor configured to receive image data representing the traffic sign and to determine a feature vector for the image data, the feature vector having an integer number M of components. The device also comprises a classification data base having stored therein a set of vectors, each one of the vectors of the set having M vector components, the vectors of the set being mutually orthogonal. The processor may be coupled to the classification data base and being configured to retrieve the set of vectors from the classification data base and to evaluate a decision function as a function of the determined feature vector and the set of vectors stored in the classification data base.

In such a device, the set of orthogonal vectors is used to evaluate the decision function. The decision function may include a sum of a decision function kernel, summed over the vectors of the orthogonal set. As the number of terms in the sum is equal to or less than M, classification can be performed faster than when using a greater number N of support vectors.

The set includes less than M vectors. This allows the classification time to be reduced further.

The set of vectors may include plural vectors $\vec{z}_j$ with j being an integer vector label, $1 \le j \le Nr$, where Nr is the number of orthogonal vectors of the set. The processor may be configured to compute, for a plurality of the vectors $\vec{z}_j$, a kernel function $K(\vec{F}, \vec{z}_j)$, where $\overline{F}$ denotes the feature vector determined for the image data.

The processor may be configured to compute a decision function which includes a weighted sum of the kernel function $K(\vec{F}, \vec{z}_j)$, summed over the vectors $\vec{z}_j$ of the set. The processor may determine weighting coefficients based on the classification data base.

The kernel function $K(\vec{F}, \vec{z}_j)$ may be proportional to $(\vec{F} \circ \vec{z}_j)^{2 \cdot c}$, with c being an integer greater than 0. In particular, the kernel function may be a homogeneous quadratic polynomial, i.e., c=1. For this case, the device may perform classification using the set of orthogonal vectors with the same reliability as a device operating on a much greater set of support vectors in a SVM which also uses a quadratic kernel.

The device may be configured to perform multi class classification, i.e., to classify the traffic sign into one of the classes when there are more than two classes. To this end, the classification data base may have stored therein a further set of vectors, each one of the vectors of the further set having M vector components, the vectors of the further set being mutually orthogonal. The processor may be configured to retrieve the further set of vectors from the classification data base and to evaluate a further decision function as a function of both the determined feature vector and the further set of vectors stored in the classification data base. Evaluation of the further decision function may be performed as described above for evaluation of the decision function.

The device may comprise a 3D camera, e.g. a PMD camera, to provide 3D image data to the processor. The processor may be configured to perform an image segmentation based on the 3D image data to identify the image data representing the traffic sign in a 2D image. Reliable segmentation of image data representing a traffic sign may be attained using the depth information of a 3D image. When a PMD camera is used, robustness against varying lighting conditions is enhanced.

The processor may be configured to generate compensated 3D image data by applying a compensation function to pixel values of the 3D image data. The compensation function may vary non-linearly as a function of pixel coordinates. The compensation function may be selected so as to partially compensate the variation in reflection intensity as a function of viewing angle observed for various 3D cameras.

The classification data base may be a classification data base obtained using a method of generating a classification data base according to any one aspect or embodiment.

The device may be installed in a vehicle.

The device may be coupled to a driver assistance system installed onboard the vehicle.

According to another aspect, a method of classifying a traffic sign into one of a plurality of classes is provided. Image data representing the traffic sign are received. A feature vector is determined for the image data, the feature vector having an integer number M of components. A set of mutually orthogonal vectors is retrieved from a classification data base, each one of the vectors of the set having M vector components. A decision function is evaluated as a function of both the determined feature vector and the retrieved set of vectors.

The method may be used to perform multi class classification. To this end, at least one further set of vectors may be retrieved from the classification data base. The decision function may be evaluated as a function of both the determined feature vector and the retrieved further set of vectors. The values obtained for the decision function in both cases, i.e., when evaluated based on the retrieved set of vectors and when evaluated based on the retrieved further set of vectors, may be compared. Multiclass classification may generally be performed for a larger number of classes, using a correspondingly larger number of sets of vectors stored in the decision data base.

The classification data base may be a classification data base obtained using a method of generating a classification data base according to any one aspect or embodiment.

The method may be performed onboard a vehicle.

Further embodiments of the method of classifying a traffic sign may correspond to the embodiments of the device for classifying a traffic sign.

The methods and devices according to the various aspects and embodiments of the invention may be utilized in all fields of application in which it is desirable or required to classify or recognize a traffic sign. It is anticipated that driver assistance systems installed in vehicles or methods and systems for automatic feature extraction that may be utilized to generate digital maps are possible fields of application. However, embodiments of the invention are not limited to these specific applications that are mentioned for illustration rather than limitation.

Brief Description of the Drawings

Embodiments of the invention will be described in more detail with reference to the accompanying drawing.

Fig. 1 is a schematic block diagram representation illustrating a system for generating a classification data base and plural devices for performing traffic sign classification according to embodiments.

Fig. 2 is a schematic graph illustrating the parameter set of a support vector machine which is utilized in a method of an embodiment.

Fig. 3 is flow diagram representation of a method of generating a classification data base according to an embodiment.

Fig. 4 is flow diagram representation of a procedure for selecting a sub set of eigenvectors in a method of generating a classification data base according to an embodiment.

Fig. 5 is a schematic block diagram representation illustrating a device for classifying traffic signs according to an embodiment.

Fig. 6 is flow diagram representation of a method of classifying a traffic sign according to an embodiment.

Fig. 7 is flow diagram representation of a procedure for identifying image data representing a traffic sign in a method of classifying a traffic sign according to an embodiment.

Detailed Description of Embodiments

Embodiments of the invention will be described with reference to the drawings in the following. It is to be understood that the present invention is not limited to the specific embodiments. For illustration, while some embodiments will be described in the context of driver assistance systems provided onboard of vehicles, methods and devices according to embodiments may also be implemented in other fields of application, such as the analysis of previously recorded image sequences for generating digital maps. Further, unless explicitly stated otherwise, the features of the various embodiments may be combined with each other.

A method of generating a classification data base for traffic sign classification as well as methods of and devices for classifying traffic signs are described. Using the method of generating a classification data base, the parameter set of a trained support vector machine (SVM) is processed to generate a set of orthogonal vectors which is smaller, and may be much smaller than the set of support vectors in the parameter set of the original SVM. Using the data base of orthogonal vectors, traffic sign classification may be performed faster, and in some cases significantly faster, as compared to evaluating a decision function using the parameter set of the original trained SVM. For illustration rather than limitation, examples for classes into which traffic signs may be classified include "restriction sign" and "end of restriction sign". A classification may be performed for more than two classes, which may be, for illustration, "restriction sign having three numerical digits thereon", "restriction sign having two numerical digits thereon", "restriction sign having no digits thereon", and "end of restriction sign".

In the methods and devices according to various embodiments, support vectors of a trained SVM or a set of orthogonal vectors generated based on the support vectors are utilized. As used herein, the term "vector" refers to an M-tuple of numbers, with $M > i$ being an integer number. The vector may be real-valued, but the skilled person will appreciate that methods and devices of embodiments may be readily adapted to complex-valued vectors. The M-tuple of numbers of the support vectors or of the set of vectors generated therefrom may be provided in any suitable form, without being limited to row or column vector form. Vector components of the vectors correspond to feature descriptors arranged in a feature vector. In particular, the support vectors are generally feature vectors computed for sample images for training the SVM. The set of orthogonal vectors, which is computed based on the matrix, is defined in the M-dimensional feature descriptor space, but does in general not correspond to feature vectors of actual training images.

The methods and devices of the various embodiments are not limited to a particular definition of the feature descriptors. For illustration, in a simple implementation, each feature descriptor may correspond to a pixel value of an image, i.e., the feature value may then represent a sub-set of pixel values of an image, e.g. in greyscale. Other definitions of feature descriptors may be used for enhanced robustness. Examples for feature vectors known to the skilled person, which may be employed to define the vector space in which the support vectors and the set of orthogonal eigenvectors of a matrix are defined, include a Scale-Invariant Feature Transform (SIFT) descriptor, a Speeded Up Robust Features (SURF) descriptor, a Rotation Invariant Feature Transform (RIFT) descriptor, a Generalized Robust Invariant Feature (G-RIF) descriptor, a Principal Components Analysis SIFT (PCA-SIFT) descriptor or a Gradient Location and Orientation Histogram (GLOH) descriptor.

Both when training the SVM and when using the smaller set of orthogonal vectors for classification, image data is subject to various operations, such as computing a feature vector. Each pixel of image data has associated with it at least one value. The image data may be interpreted to be a two-dimensional data field or signal which may be subject to the operations which allow a feature vector to be determined. For illustration, the values associated with the pixels of the image data for which the operations required to determine a feature vector may be performed may be greyscale values of a greyscale image. If the image data has colour information, for each pixel the colour tuple of a colour model, such as RGB, CMYK or similar, may be converted to greyscale before the various operations are performed thereon. Alternatively, the various operations may also be performed on one of the values of a colour tuple of a colour model.

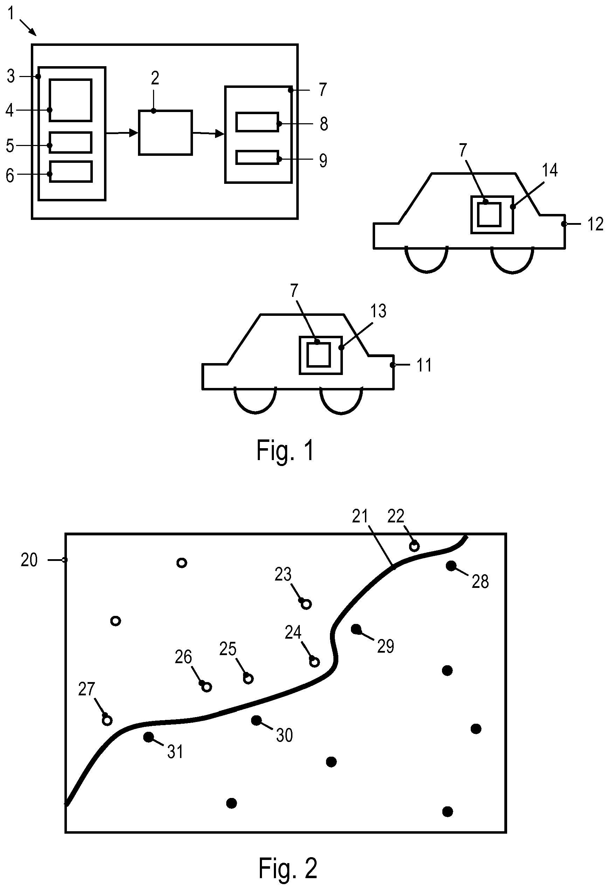

Fig. 1 is a schematic representation for illustrating one application scenario of embodiments. Fig. 1 shows a system 1 including a processor 2 which generates a classification data base 7 using the parameter set 3 of a trained SVM. The parameter set of the trained SVM 3 includes support vectors, each of which has M vector components, i.e., the support vectors are M-tuples with M being an integer greater than 1. The support vectors live in an M-dimensional space of feature descriptors, with a vector component of the support vectors respectively corresponding to a feature descriptor. The parameter set 3 includes at least a number "N" of support vectors. The parameter set 3 is such that the number of support vectors fulfils $N > M$, in particular $N \gg M$, i.e., the number of support vectors is greater, and typically much greater, than the dimension of the space in which they are defined.

The system 1 determines a set of mutually orthogonal vectors, or may determine several different sets of such mutually orthogonal vectors if multiclass classification is to be performed, using the parameter set 3 of the trained SVM. Each vector of the set has M vector components, i.e., the vectors of the set are also M-tuples. However, the number of the orthogonal vectors is limited from above by M. I.e., each set of orthogonal vectors determined by the system 1 has $\leq$ M vectors. The set of vectors is included in the classification data base. As the number of vectors in the set of orthogonal vectors is less than the number of support vectors in the parameter set of the trained SVM, the set of vectors in the classification data base may also be referred to as a reduced set.

The classification data base 7 is deployed to one device for traffic sign classification or to several devices for traffic sign detection. For illustration, Fig. 1 shows a plurality of vehicles 11, 12, which respectively include a device 13 or 14 for classifying traffic signs. The device 13, 14 for classifying traffic signs is respectively equipped with the classification data base 7. As will be described in more detail in the following, the reduction in the number of vectors attained by the operation of the system 1 allows traffic sign classification to be performed faster in the devices 13, 14, which utilize the classification data base 7. A faster classification time in use of the devices 13, 14 can therefore be attained by processing the parameter set 3 of the trained SVM to generate the classification data base 7. The task of generating the classification data base 7 generally has to be performed only once for any parameter set of a trained SVM, while classification using the classification data base 7 may be performed repeatedly and in many devices in which the classification data base 7 may be installed. Therefore, considerable time gain can be achieved at least when traffic sign classification has to be performed frequently, and/or when the time required for classification is an issue.

It will be appreciated that, while devices for classifying traffic signs installed in vehicles 11, 12 are shown in Fig. 1, the classification data base 7 may also be used in stationary devices, for example in order to perform automatic processing of video data, which is a process frequently encountered when generating digital maps.

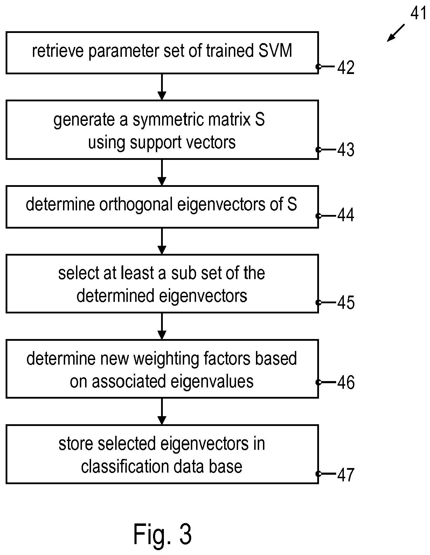

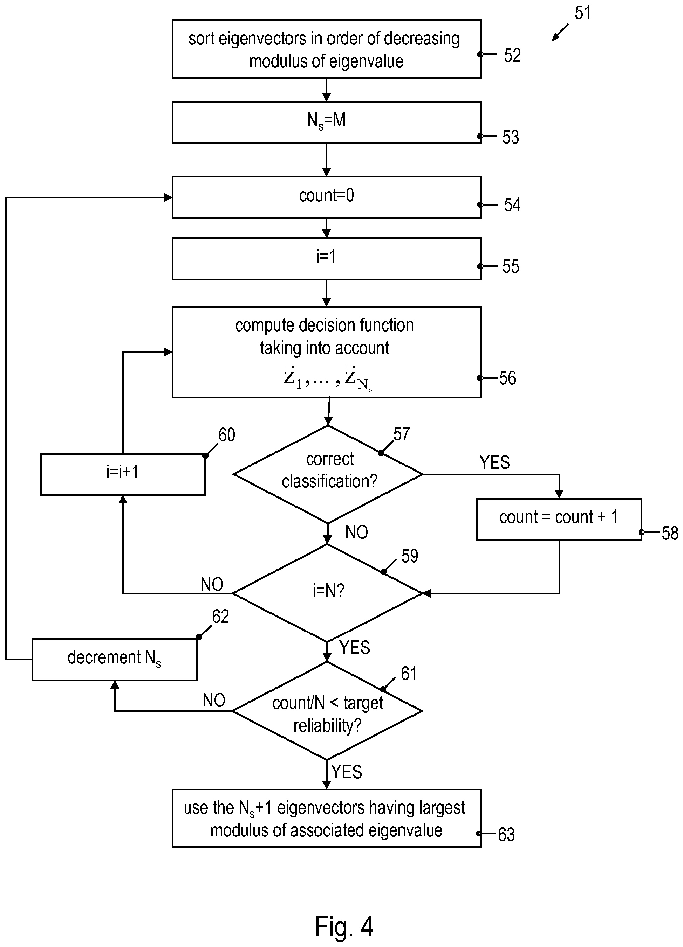

The operation of the system 1 will be briefly illustrated with reference to Figs. 1 and 2, and will be explained in more detail with reference to Figs. 3 and 4.

The parameter set 3 of the SVM will generally include the N support vectors 4, but may include additional data. In particular, the parameter set 3 may include data 5 representing weighting factors associated with the support vectors, there being one weighting factor for each support vector. The parameter set 3 may also include additional data 6, which may include a constant summand in a decision function. Further, the parameter set 3 includes information on which class of a plurality of classes any support vector belongs to. The latter information does not need to be stored as a table referencing traffic sign classes against support vectors, but may be stored in more compact form. For illustration, if there are two classes only, it may be sufficient to label the support vectors, or to store them in a sequential order, such that all support vectors associated with a first class are consecutively labelled from 1 to L, and all support vectors associated with a second class are consecutively labelled from L+1 to N. In this case, it is sufficient to store L in the parameter set 3.

The different parameters in the parameter set 3, namely the support vectors, the weighting factors, and, if applicable, other data, are determined upon training of the SVM. The training of the SVM may, but does not need to, be performed as part of the method of generating the classification data base. In the training, feature vectors of a large number of images of traffic signs are determined and are used to select support vectors and to set weighting coefficients of a decision function. This procedure is, as such, known to the skilled person. An introduction is given for example in C.J.C. Burges, "A Tutorial on Support Vector Machines for Pattern Recognition", Data Mining and Knowledge Discovery, 1998, Kluwer Academic Publishers, Netherlands, vol. 2. no. 2, pp. 121-167. Generally, the SVM uses a decision function of the type

$$d(\vec{F}) = \sum_{i=1}^{N} \alpha_i \cdot y_i \cdot K\left(\vec{F}, \vec{X}_i\right) + b \ . \qquad (5)$$

In Equation (5), i a support vector label with $1 \leq i \leq N$, $\vec{X}_i$ is the $i^{th}$ support vector, $\alpha_i$ is the weighting factor associated with the $i^{th}$ support vector $\vec{X}_i$, and $y_i$ is set to have a first value if the $i^{th}$ support vector $\vec{X}_i$ belongs to a selected class (e.g., the first class) of the plurality of classes and $y_i$ is set to have a second value otherwise. There are several choices of the values for $y_i$ which are widely used, e.g., $y_i \in \{-1,1\}$ (the first value being 1, the second value being -1 or vice versa), or $y_i \in \{0,1\}$.

In Equation (5), $K(\cdot,\cdot)$ is the kernel function. Various kernel functions are known and widely used, including

$$K\left(\vec{F}, \vec{X}_i\right) = \left(\vec{F} \cdot \vec{X}_i\right)^p \ \text{with integer p,} \qquad (6)$$

$$K\left(\vec{F}, \vec{X}_i\right) = \exp\left(-\left\|\vec{F} - \vec{X}_i\right\|^2 / 2\sigma^2\right), \ \text{or} \qquad (7)$$

$$K\left(\vec{F}, \vec{X}_i\right) = \tanh\left(\kappa\, \vec{F} \cdot \vec{X}_i - \delta\right). \tag{8}$$

In various embodiments of the invention, kernel functions of the form of Equation (6) will be considered, with p being an even integer and, in particular, with p=2. For such kernel functions, image classification using the classification data base having a set of orthogonal vectors gives fail rates which are comparable to, or even identical, to the ones of the original SVM, while allowing the classification to be performed more rapidly when the classification data base is used.

The parameter set of the trained SVM includes the weighting coefficient $\alpha_i$, the support vectors $\vec{X}_i$, the term b and some information which allows one to determine the classes to which the support vectors $\vec{X}_i$ belong. As mentioned, the process of training the SVM is, as such, known to the skilled person.

Using the parameter set of the trained SVM, classification of image data is conventionally performed by evaluating the decision function of Equation (5). For illustration, for two classes, a decision on whether the image data represent a traffic sign belonging to the first class or to the second class may be made depending on whether $d(\vec{F})$ is greater than or less than a threshold. As can be taken from Eq. (5), evaluation of the decision function requires the kernel function to be computed for the different support vectors. In practice, the number of support vectors which is used to attain good performance, in terms of false rates, may be selected to be on the order of ten times or several ten times the dimension of each support vector (i.e., the number M of vector components of each support vector). For illustration, for M=50, more than 1000 support vectors for each class may be used in conventional classification.

Fig. 2 is a schematic representation of a plane intersecting the M-dimensional space of feature descriptors in which the feature vectors are defined. A portion 20 of the plane is shown in which feature vectors associated a first class, indicated by open circles, and feature vectors associated with a second class, indicated by closed circles, are located. A (M-i)-dimensional decision hyper plane, the intersection of which with the plane through the M-dimensional feature space is shown at 21, separates the part of the M-dimensional space which is associated with a first class of traffic signs (e.g., end of restriction signs) from another part of the M-dimensional space associated with a second class of traffic signs (e.g., restriction signs having two numerical digits). In the training phase of the SVM, support vectors are identified which allow one to establish whether a feature vector lies on the side of the hyper plane which is associated with the first class or on the side associated with the second class. These support vectors 22-27 and 28-31 are used when performing classification by evaluating the decision function of Equation (5).

According to embodiments of the invention, and as will be described in more detail with reference to Figs. 3-7 below, the classification data base 7 is generated to include a set of vectors having a number $N_r$ smaller than the number N of support vectors in the parameter set of the original trained SVM. Several such sets may be generated for performing multi-class classification. In each one of the sets of vectors, there are at most M mutually orthogonal vectors. The set(s) of orthogonal vectors are schematically indicated as data 8 in Fig. 1. For each one of the set(s), the vectors are determined as eigenvectors of a symmetric matrix. The symmetric matrix is generated such that, for plural matrix elements, the respective matrix element is determined as a weighted sum of products of vector components of the support vectors. Additional data 9 which may include information determined based on the eigenvalues associated with the eigenvectors of the symmetric matrix is also stored in the classification data base. The additional data 9 may optionally also include information on parameters of the parameter set 3 of the original trained SVM, such as the constant summand b in Equation (5). In implementations, the classification data base does not include information which relates vectors of the set of orthogonal vectors to respectively one of the classes.

Fig. 3 is a flow diagram of a method 41 of generating a classification data base according to an embodiment. The method may be performed by the processor 2 of the system 1.

At 42, information is retrieved from a parameter set of a trained SVM. The trained SVM be an SVM trained on image data representing traffic signs, which belong to one of plural different classes. The parameter set of the SVM may be such that it corresponds to a kernel function of the form of Equation (6). The parameter set of the SVM may in particular be such that it corresponds to a kernel function of the form of Equation (6) which is a homogeneous polynomial of even order (p being an even integer), and in particular a quadratic homogeneous polynomial (p=2 in Equation (6)).

The retrieved parameters include, at least, a plurality of support vectors $\vec{X}_i$ and the associated real-valued weighting factors $\alpha_i$. While all support vectors of the parameter set may be retrieved, the plurality of retrieved support vectors may also be less in number than the number of support vectors stored in the parameter set of the trained SVM. The number of retrieved support vectors will be denoted by N, and $1 \le i \le N$ is a support vector index. The number of retrieved support vectors is greater than the number M of vector components of each retrieved support vector. Additional parameters may be retrieved, such as the constant summand b of the decision function of the trained SVM. The retrieved information may be such that, for each retrieved support vector of the plurality of support vectors, the class associated with the support vector may be determined.

At 43, a symmetric matrix is generated based on the support vectors. Generating the matrix may include computing, for several pairs of indices (u,v), the sum

$$\sum_{i=1}^{N} y_i \cdot \alpha_i \cdot X_{i,u} \cdot X_{i,v} \, . \qquad (9)$$

In Equation (9), u, v are integers smaller than or equal to the number M of vector components of the support vectors, $1 \leq u, v \leq M$. For all i, $X_{i,u}$ is the $u^{th}$ component of the $i^{th}$ support vector $\vec{X}_i$, and $X_{i,v}$ is the $v^{th}$ component of the $i^{th}$ support vector $\vec{X}_i$. In Equation (9), $\alpha_i$ is the weighting factor associated with the $i^{th}$ support vector $\vec{X}_i$, and $y_i$ is set to have a first real value if said $i^{th}$ support vector belongs to a selected class of the plurality of classes and $y_i$ is set to have a second real value if the $i^{th}$ support vector does not belong to the selected class of the plurality of classes.

According to an embodiment, generating the symmetric matrix in step 43 may include computing the right-hand side of Equation (9) for all $1 \leq u \leq M$ and all $1 \leq v \leq M$. In this case, the symmetric matrix may be written to be

$$S = \sum_{i=1}^{N} y_i \cdot \alpha_i \cdot \vec{X}_i \cdot \vec{X}_i^{T} \, , \qquad (10)$$

where $\vec{X}_i$ is the $i^{th}$ support vector in column vector form and $\vec{X}_i^{T}$ is the $i^{th}$ support vector in row vector form, i.e.,

$$\vec{X}_i = \begin{pmatrix} X_{i,1} \\ \vdots \\ X_{i,u} \\ \vdots \\ X_{i,M} \end{pmatrix} \qquad (11)$$

and

$$\vec{X}_i^{T} = \begin{pmatrix} X_{i,1} & \dots & X_{i,u} & \dots & X_{i,M} \end{pmatrix} . \qquad (12)$$

For illustration, it will be assumed that the symmetric matrix is generated according to Equation (10). This matrix is an M×M matrix, which is evidently symmetric. In this case, the matrix elements of the symmetric matrix are given by Equation (9) for all $1 \leq u \leq M$ and all $1 \leq v \leq M$. However, modifications in generating the symmetric matrix are possible. For illustration, the skilled person will appreciate that the following applies equally when the symmetric matrix is generated as the right-hand side of Equation (10) plus any matrix proportional to the M×M unity matrix. Further, larger symmetric matrices may be generated which include matrix elements determined according to Equation (9).

While Equations (1)-(12) relate to a case in which the weighting coefficients and support vectors $\vec{X}_i$ are real-valued, it will be appreciated the methods and devices described herein can be readily adapted to complex valued support vectors $\vec{X}_i$. In this case, a hermitian matrix

$$S = \sum_{i=1}^{N} y_i \cdot \alpha_i \cdot \vec{X}_i \cdot \vec{X}_i^{T\,*} \, , \qquad (13)$$

may be generated, where the asterisk "*" denotes complex conjugation. Evidently, S of Equation (13) is hermitian, and there are M orthogonal eigenvectors which span the M-dimensional space of feature vectors.

At 44, a number of orthogonal eigenvectors of the symmetric matrix is determined. The eigenvalues associated with the determined eigenvectors may also be determined. M orthogonal eigenvectors of the symmetric matrix S may be determined. In another embodiment, less than M eigenvectors of the matrix S may be determined. Using less than M eigenvectors of M for generating the classification data base may be sufficient, as will be explained with reference to Fig. 4. The skilled person will appreciate that several efficient algorithms for determining the eigenvectors and eigenvalues of a symmetric or hermitian matrix are known. Some of these algorithms determine eigenvectors of the matrix in a sequential manner, with the eigenvectors associated with the eigenvalues having greatest modulus being determined first. The algorithm for determining the eigenvectors may be terminated according to whether or not the determined eigenvectors are already sufficient to attain a desired rate of correct classifications.

As the matrix S is symmetric, the spectral theorem guarantees that there are M mutually orthogonal eigenvectors. By definition,

$$S \cdot \vec{z}_j = \lambda_j \cdot \vec{z}_j \text{ and} \tag{14}$$

$$\vec{z}_j \circ \vec{z}_k \propto \delta_{j,k} \tag{15}$$

with a discrete Dirac delta in Equation (15). Similar relations hold for a hermitian matrix S. Here, for all $1 \le j \le M$, $\vec{z}_j$ is the $j^{th}$ eigenvector of S and $\lambda_j$ is the associated eigenvalue. The eigenvectors may, but do not need to be normalized.

By virtue of the spectral theorem,

$$S = \sum_{j=1}^{M} \frac{\lambda_j}{\left\| \vec{z}_j \right\|^2} \cdot \vec{z}_j \cdot \vec{z}_j^T . \tag{16}$$

As will be explained in more detail below, this representation shows that classification may be performed by evaluating a sum over the smaller number of eigenvectors of the matrix S, rather than over the greater number of support vectors as in Equation (5). The eigenvectors having the eigenvalues with greatest modulus are the predominant terms in the spectral decomposition in Equation (16).

At 45, at least a sub set of the eigenvectors of the matrix S is selected for storing in the classification data base. As will be described in more detail with reference to Fig. 4, the sub set may be selected such that a desired performance, in terms of correct classifications, is attained when classification is performed using only a part of the eigenvectors $\vec{z}_j$. In order to verify whether a desired performance is attained, a test may be performed by inputting feature vectors associated with known classes to a model which utilizes only a part of the eigenvectors, as will be explained in more detail with reference to Fig. 4.

At 46, new weighting factors associated with the eigenvectors $\vec{z}_j$ or with the sub set of the eigenvectors selected at 45 may be determined. As will be explained in more detail below, the new weighting factors may be given by

$$\frac{\lambda_j}{\left\| \vec{z}_j \right\|^2} . \tag{17}$$

In an embodiment, Equation (17) may be evaluated. In another embodiment, the determining of new weighting factors at 46 may be omitted, for example when the eigenvectors are normalized eigenvectors or when calculation of the quotient of Equation (17) is performed in the device which performs traffic sign classification based on the classification data base.

At 47, the sub set of eigenvectors determined at 45 or all eigenvectors of the matrix S are stored in the classification data base. Additionally, information relating to the eigenvalues $\lambda_j$, such as the quantity given in Equation (17), may be stored in the data base for use in traffic sign classification. As will be explained below, it may not always be required to also store the factors of Equation (17) or the eigenvalues $\lambda_j$ in the decision data base. For illustration, for a homogeneous polynomial kernel as given in Equation (6), the eigenvectors $\vec{z}_j$ may also be renormalized in dependence of the eigenvalues $\lambda_j$ (for example by multiplication with $(\lambda_j/\|\vec{z}\|^2)^{1/p}$ with p being the order of the polynomial kernel function) such that it is not required to store the parameters $\lambda_i$ in the decision data base. As the eigenvectors $\vec{z}_j$ are not associated with a particular class of traffic signs, there is generally no information on the classes of the eigenvectors which could be stored in the classification data base.

By performing the method explained with reference to Fig. 3, a classification data base is generated which includes a set of orthogonal vectors, determined as eigenvectors of the symmetric matrix S, and information on the associated eigenvalues. This information may be used for evaluating the decision function of Equation (5).

For illustration, it will be assumed that a homogeneous polynomial of order 2 is used as kernel function K, as given in Equation (6) with p=2. Then, using Equation (16),

$$
\begin{aligned}
d(\vec{F}) &= \sum_{i=1}^{N} \alpha_i \cdot y_i \cdot K\left(\vec{F}, \vec{X}_i\right) + b \\
&= \sum_{i=1}^{N} \alpha_i \cdot y_i \cdot \left(\vec{F} \circ \vec{X}_i\right)^2 + b \\
&= \vec{F}^T \cdot \left( \sum_{i=1}^{N} y_i \cdot \alpha_i \cdot \vec{X}_i \cdot \vec{X}_i^T \right) \cdot \vec{F} + b \\
&= \vec{F}^T \cdot \left( \sum_{j=1}^{M} \frac{\lambda_j}{\left\| \vec{z}_j \right\|^2} \cdot \vec{z}_j \cdot \vec{z}_j^T \right) \cdot \vec{F} + b \\
&= \sum_{j=1}^{M} \frac{\lambda_j}{\left\| \vec{z}_j \right\|^2} \cdot \left(\vec{F} \circ \vec{z}_j\right)^2 + b \\
&= \sum_{j=1}^{M} \frac{\lambda_j}{\left\| \vec{z}_j \right\|^2} \cdot K\left(\vec{F}, \vec{z}_j\right) + b.
\end{aligned}
\qquad (18)
$$

As will be appreciated, the original sum over N > M, and typically N >> M terms, can be replaced by a sum having a smaller number of terms. The Kernel then has to be evaluated only for the eigenvectors $\vec{z}_j$, which have a number M which is smaller, and may be much smaller, than the number N of support vectors of the trained SVM. In Equation (18), $\vec{F}$ denotes the feature vector of image data to be classified in column vector form, and $\vec{F}^T$ denotes the feature vector in row vector form.

For illustration, reverting to the example of a support vector having M=50 vector components, the parameter set of the trained SVM may include more than 1000 support vectors for each class. The sum over more than 2000 support vectors in the first line of Equation (18) can therefore be replaced by a sum over 50 eigenvectors $\vec{z}_j$ only, in order to determine whether a traffic sign belongs, or does not belong, to a selected class. This represents a considerable speed-up as compared to directly evaluating the decision function of the SVM. As the number of orthogonal vectors $\vec{z}_j$ is bounded from above by M, traffic sign classification performed using the classification data base with the orthogonal vectors $\vec{z}_j$ allows one to use feature vectors having more vector components as compared to a traditional SVM approach, while attaining classification times which are still acceptable for live applications such as advanced driver assistance systems.

While Equation (18) is strictly valid in the sense of an identity only for the quadratic homogenous kernel as given in Equation (6) with p=2, tests performed with various kernels show that determining an approximation to the decision function according to

$$\sum_{j=1}^{M} \frac{\lambda_j}{\left\|\vec{z}_j\right\|^2} \cdot K\left(\vec{F}, \vec{z}_j\right) + b \ , \qquad (19)$$

with eigenvectors $\vec{z}_j$ of a symmetric matrix determined as described above, is a good approximation for a wide variety of kernel functions. In particular, rates of correct classifications comparable to the ones of the original SVM can be obtained for homogeneous polynomial kernels, as indicated in Equation (6) with a wide variety of exponents p. However, a high success rate in classification is also still obtained for other kernels, such as the Gaussian kernel of Equation (7) or the two-layer sigmoidal neural network kernel of Equation (8).

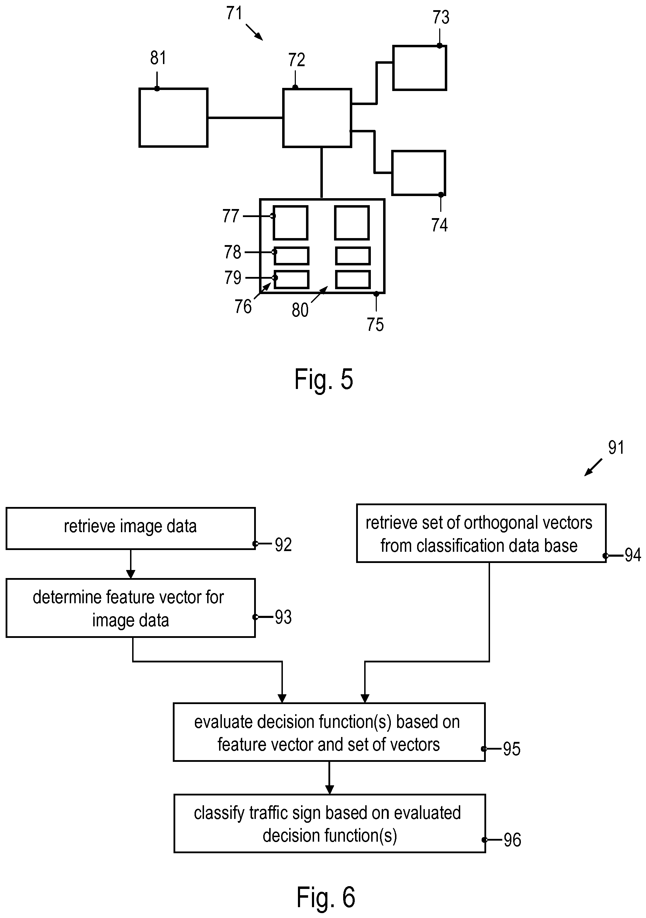

As will be explained in more detail with reference to Fig. 5, it is not required to store all M eigenvectors $\vec{z}_j$ in the classification data base in order to obtain satisfactory classification performance. Rather, a subset having a number $N_r$ < M of the eigenvectors is stored in the classification data base for subsequent use in classification. In this case, an approximation of the decision function may be computed by evaluating

$$\sum_{j=1}^{N_r} \frac{\lambda_j}{\left\|\vec{z}_j\right\|^2} \cdot K\left(\vec{F}, \vec{z}_j\right) + b \ . \qquad (20)$$

According to an embodiment, in step 47 of the method 41 of Fig. 3, data is stored in the classification data base which allows a classification device to evaluate Equation (19) or Equation (20). For illustration, the eigenvectors $\vec{z}_j$, the associated eigenvalues $\lambda_j$ and the summand b may be stored in the classification data base. For further illustration, the eigenvectors $\vec{z}_j$, the renormalized weighting factors given by Equation (17) and the summand b may be stored in the classification data base in another embodiment.

The skilled person will appreciate that, while an embodiment has been described in which the eigenvectors of a matrix as defined in Equation (13) are determined, the explanations given with reference to Fig. 3 above also apply to other matrices. For example, any matrix of the form

$$S = \sum_{i=1}^{N} y_i \cdot \alpha_i \cdot \vec{X}_i \cdot \vec{X}_i^T + A \cdot \begin{pmatrix} 1 & 0 & 0 & \dots & 0 \\ 0 & 1 & 0 & \dots & 0 \\ 0 & 0 & 1 & \dots & 0 \\ \vdots & \vdots & \vdots & \ddots & \vdots \\ 0 & 0 & 0 & 0 & 1 \end{pmatrix}, \qquad (21)$$

with a real-valued number A, in which a matrix proportional to the M×M unity matrix is added to the right-hand side of Equation (13), will have the same eigenvectors as the matrix defined in Equation (13). As the constant summand b of the decision function of Equation (5) can be included in a matrix representation having the form of Equation (21), it will not even be necessary to store the factor b in the classification data base in this case. By computing eigenvectors and eigenvalues of the matrix given in Equation (21), a classification data base can be generated for use in traffic sign classification.

Further, the symmetric matrix does not need to be an M×M matrix. For illustration rather than limitation, the skilled person will appreciate that the eigensvectors of a matrix as given in Equation (13) or Equation (21) may also be obtained by diagonalizing a (M+K)×(M+K) matrix, with K being an integer greater than 0, which includes the matrix given Equation (13) or Equation (21) in a portion of the matrix. An example for such a separable matrix is a matrix of the form

$$\begin{pmatrix} \displaystyle\sum_{i=1}^{N} y_i \cdot \alpha_i \cdot \vec{X}_i \cdot \vec{X}_i^{T} & \vec{0}_{M \times K} \\ \vec{0}_{K \times M} & \vec{\vec{L}}_{K \times K} \end{pmatrix} \qquad (22)$$

where $\vec{0}_{K \times M}$ is a zero matrix having K rows and M columns, $\vec{0}_{M \times K}$ is a zero matrix having M rows and K columns, and $\vec{\vec{L}}_{K \times K}$ is an arbitrary K×K matrix. Using a matrix of the form as given in Equation (22) may be useful, for example, in order to determine the eigenspectrum of plural matrices of the form of Equation (13) or (21) with one diagnolization of a larger matrix.

While the determination of one set of vectors has been described with reference to Fig. 3, steps 43-47 may be repeated several times when a classification into more than two classes is to be performed. For illustration, in order to implement a multi-class classification using a one-against-all technique, different symmetric matrices may be generated according to any one of the procedures described above. While the support vectors $\vec{X}_i$ and the associated weighting factors $\alpha_i$ are the same when generating the different matrices, the factors $y_i$ will vary depending on the class for which the matrix is generated. For illustration, a first matrix can be generated by setting $y_i$ to have the first value (e.g., 1) if the $i^{th}$ support vector belongs to the first class and by setting $y_i$ to have the second value (e.g., 0 or -1) otherwise. By determining the eigenspectrum of this matrix, a first set of orthogonal vectors and associated eigenvalues is determined. A second first matrix can be generated by setting $y_i$ to have the first value (e.g., 1) if the $i^{th}$ support vector belongs to the second class and by setting $y_i$ to have the second value (e.g., 0 or -1) otherwise. By determining the eigenspectrum of this matrix, a second set of orthogonal vectors and associated eigenvales is determined. This process can be continued for the various classes. The different sets of orthogonal vectors and other information, such as the eigenvalues, which allow a classification device to compute the sums of Equation (19) or (20), are stored in the classification data base. In order to perform multi class classification, the traffic sign classification device which uses the classification data base may evaluate a decision function, such as the one given in Equation (19) or (20), several times, using the eigenvectors and eigenvalues of the different sets. By identifying the maximum or minimum of the values computed by evaluating the decision function using the different sets of orthogonal eigenvectors, the class to which a traffic sign belongs is identified.

The operation of methods and devices according to embodiments will be illustrated further in the context of a multi class classification. For illustration, the methods and devices described above have been applied to perform classification for seven different classes of traffic signs, using real image data. A total of 4000 images has been used. Support vectors having M=50 components were generated for the images and used in training. Seven different SVMs were trained, each of which had the general form of Equation (5) with a quadratic homogeneous kernel function as given in Equation (6) with p=2. As indicated above, the factors of $y_i$ in Equation (5) are different depending on which one of the seven different SVMs is trained, in order to perform a binary discrimination indicative of whether or not a traffic sign is in a given one of the seven classes or in any other class. For illustration, when training a first SVM, the factors of $y_i$ in Equation (5) have a first value if the associated support vector belongs to the first class and have a second value if the associated support vector belongs to any one of the second to seventh class. When training a second SVM, the factors of $y_i$ in Equation (5) have the first value if the associated support vector belongs to the second class and have a second value if the associated support vector belongs to any one of the first or third to seventh class, etc. When a multi-class classification involves the training of several SVMs, the support vectors and weighting functions resulting from the training may generally also be different for the different SVMs. I.e., in any one embodiment relating to multi class classification, the support vectors and weighting factors in Equation (4) may be different from the support vectors and weighting factors in Equations (2) and (3).

By performing the training, parameter sets of seven SVMs are generated. In total, the seven trained SVMs use 1400 support vectors in the specific example contemplated here.

For each one of the seven different SVMs, a matrix as given in Equation (10) was generated and diagonalized. In the thus generated matrix, the matrix elements respectively had the form given by Equation (9). By virtue of the diagonalization, seven different sets of eigenvectors and eigenvalues were computed for the different matrices. There are respectively 50 eigenvectors associated with each one of the seven symmetric matrices.

Performance of the classification was tested using the decision function given in Equation (19) (with 50 eigenvectors for each binary decision) or Equation (20) (with a further reduced number of terms to be evaluated). It will be appreciated that, when there are seven different classes, seven different decision functions of the form given in Equation (19) or (20), respectively, are generated.

For testing, classification was performed on 700 sample images. For each one of the images, a feature vector having 50 components was determined. The decision function of Equation (19) or (20), respectively, was evaluated for each one of the seven sets of eigenvectors and associated eigenvalues. Each one of the seven decision functions corresponds to a binary decision function associated with whether or not a traffic sign is in a given one of the classes or in any other class. For example, a decision function using the eigenvectors and eigenvalues of the first matrix is associated with a binary decision on whether or not the traffic sign represented by the image belongs to the first class. The decision function using the eigenvectors and eigenvalues of the second matrix is associated with a binary decision on whether or not the traffic sign represented by the image belongs to the second class, etc. The traffic sign of a sample image was assigned to the class for which the decision function was extremum, e.g., maximum (depending on the specific choice of the first and second values of $y_i$).

The performance, in terms of correct classifications, was evaluated by determining the number of true positive classifications relative to the number of sample images which actually belong to the respective class. In other words, the quantity TP/P was computed for each one of the classes, where TP ("True Positives") is the number of images which were correctly classified as belonging to the first class, second class, etc., divided by the number P ("Positives") of traffic signs in the sample images which actually belong to the respective class.

In a first implementation, a decision function of the form given in Equation (20) with $N_r=M$ is evaluated. I.e., all 50 eigenvectors and eigenvalues are used for each one of the seven binary decision functions. The results of the classification are given in the following Table 1. For comparison, results obtained using the original full set of 1400 support vectors are given in the following Table 2. The classification performance, in terms of correct positive classifications, is identical when using the seven times 50 eigenvectors in the seven decision functions as given in Equation (19) and when using the original 1400 support vectors.

Table 1: Fraction of correct true positives when using all 350 eigenvectors (seven decision functions respectively using 50 eigenvectors)

| class # | 1 | 2 | 3 | 4 | 5 | 6 | 7 |
|---|---|---|---|---|---|---|---|
| TP/P [%] | 96 | 88 | 93 | 93 | 98 | 93 | 100 |

Table 2: Fraction of correct true positives when using all 1400 support vectors

| class # | 1 | 2 | 3 | 4 | 5 | 6 | 7 |
|---|---|---|---|---|---|---|---|
| TP/P [%] | 96 | 88 | 93 | 93 | 98 | 93 | 100 |

In the above implementation, in which a homogeneous quadratic kernel is used and in which all eigenvectors are retained for evaluating the decision functions, the number of correct classifications is not degraded as compared to evaluating the original SVM. Classification requires the evaluation of only 350 kernel functions (seven decision functions with respectively 50 terms), as opposed to the evaluation of 1400 kernel functions in the original SVMs. The classification time is thereby reduced by a factor of approximately 1400/350=4.

In a second implementation, a decision function of the form given in Equation (20) with $N_r<M$ was evaluated. The eigenvectors which are respectively kept in the sum of Equation (20) are selected based on their eigenvalues, as will be explained in more detail with reference to Fig. 4. More specifically, the eigenvectors which provide the dominant contributions to the spectral decomposition of Equation (16) are selected for evaluating Equation (20). As will be described in more detail with reference to Fig. 4, the number of eigenvectors which are selected for evaluating the decision function in Equation (20) is set such that, when the decision function is evaluated for the reduced number $N_r<M$ of eigenvectors, the fraction of true positive classifications in each binary decision function decreases by less than a predetermined value. In the data illustrated below, only a total of 70 eigenvectors for all seven decision functions was selected for evaluating the seven decision functions as given in Equation (20). The results of the classification are given in the following Table 3.

Table 3: Fraction of correct true positives when using a total of 70 eigenvectors for seven decision functions

| class # | 1 | 2 | 3 | 4 | 5 | 6 | 7 |
|---|---|---|---|---|---|---|---|
| TP/P [%] | 93 | 88 | 95 | 93 | 97 | 93 | 100 |

As can be taken from a comparison of Table 3 with Table 1, the fraction of correct classifications is slightly reduced for some of the classes by selecting only a subset of eigenvectors. For the exemplary data used to test the classification performance, the maximum decrease in the fraction of correct positive classifications was observed for the first class, the decrease being from 96% to 93%. On the other hand, classification requires the evaluation of only 70 kernel functions in the seven decision functions in total, as opposed to the evaluation of 1400 kernel functions in the original SVMs. The classification time is thereby reduced by a factor of approximately 1400/70=20.

It will be appreciated that various modifications or alterations of the method explained with reference to Fig. 3 may be realized. For illustration, step 45 may be omitted if it is intended to store all M orthogonal eigenvectors of the matrix in the decision data base. Similarly, step 46 may be omitted when the eigenvalues are stored in the decision data base without any further processing or when the eigenvectors are normalized such that it is not required to store the eigenvalues in the classification data base.

Fig. 4 illustrates a procedure 51 which may be performed to implement the selection of a sub set of eigenvectors in step 45 of Fig. 3. Using the procedure, eigenvectors are selected according to their relevance for the spectral decomposition of Equation (16). A test classification is performed on a suitable group of test vectors, e.g., on the support vectors of the trained SVM, in order to verify whether a selected sub set has a false classification rate which is smaller than a user-defined threshold.

At 52, eigenvectors are sorted according to the modulus of their eigenvectors. The eigenvectors do not need to be logically sorted or related, but it is sufficient to identify the eigenvectors having the largest absolute eigenvalues $|\lambda_j|$. For illustration only, it will be assumed that $\vec{z}_1$ is the eigenvector having the largest absolute eigenvalue $|\lambda_1|$ and $\vec{z}_M$ is the eigenvector having the smallest absolute eigenvalue $|\lambda_M|$.

At 53, an iteration over different sizes of the vector set is started by setting a variable $N_s$ equal to M-1. $N_s$ represents the number of eigenvectors which are kept for evaluating the decision function according to Equation (20) in the test phase. Setting $N_s$ equal to M-1 means that the eigenvector with the smallest eigenvalues, and thus coefficient in Equation (20), is not taken into account.

At 54, a count parameter indicating the number of correctly classified test feature vectors is set to 0.

At 55, an iteration over test vectors is initialized by setting a parameter i equal to 1. For illustration, in the procedure of Fig. 4, the support vectors of the parameter set of the SVM may be used as test feature vectors. Other test feature values may be used to verify the performance which can be attained when using only a reduced number of the eigenvectors for classification.

At 56, a decision function of the form of Equation (20) is computed, with the upper limit of the sum being set equal to $N_r=N_s$. The decision function may thus be computed as

$$\sum_{j=1}^{N_s} \frac{\lambda_j}{\left\| \vec{z}_j \right\|^2} \cdot K\left( \vec{F} = \vec{X}_i, \vec{z}_j \right) + b \, . \qquad (23)$$

At 57, it is determined based on the computed decision function whether the test feature vector has been correctly classified. For illustration, for two classes, the sign function of the value according to Equation (23) may be computed and verified against whether or not the ith support vector $\vec{X}_i$ belongs to the first or second class. Steps 56 and 57 may be performed in a similar manner when there are more than two classes, as explained with reference to Fig. 3. In the latter case, there are different sets of orthogonal vectors, which may respectively be used to evaluate the decision function.

If it is determined that the classification has been correct, the method proceeds to 58 where the count parameter is incremented by 1. From 58, the method proceeds to 59. If it is determined that the classification has not been correct, the method proceeds directly to 59.

At 59, it is determined whether all test feature vectors have already been used for verifying performance of the classification when $N_s$ eigenvectors are retained. If there are test feature vectors for which the procedure of steps 56-59 has not yet been performed, the next feature vector is selected at 60 by incrementing the index i. The method then returns to 56.

If it is determined that there are no further test feature vectors, the method proceeds to 61.

At 61, the fraction of correct classifications, count/N, is compared to a desired target reliability. The target reliability may be user-defined. For illustration, the user may specify that having a correct classification for, e.g., 95% or 98 % of the test feature vectors, is sufficient. If the fraction of correct classifications is still greater than the target reliability, at least one further eigenvector may be removed from the set of eigenvectors at 62. The method then returns to 54 in order to verify, in the next iteration, whether the target reliability can still be attained using the decision function of Equation (23) with further decremented $N_s$.

If it is determined, at 61, that the target reliability is no longer achieved, the method proceeds to 63.

At 63, the $N_s+1$ eigenvectors of the matrix having eigenvalues with greatest modulus is selected for storing in the classification data base.

With reference to Figs. 5-7, methods and devices for classifying a traffic sign according to embodiments will be described. The methods and devices use a classification data base having one set of orthogonal vectors or plural sets of orthogonal vectors. The classification data bases may be generated using any one of the methods explained with reference to Figs. 1-4.

Fig. 5 is a schematic representation of components which may be installed in a vehicle. The components include a device 71 for classifying traffic signs. The device 71 may be coupled to a driver assistance device 81 via a vehicle board network. The device 71 for classifying traffic signs has a processor 72 and a classification data base 75. The processor 72 is configured to classify a traffic sign by evaluating a decision function, using information stored in the classification data base 75. The classification data base 75 may be a data base generated using the method of any one aspect or embodiment described with reference to Figs. 1-4.

The device 71 further includes a two-dimensional (2D) camera 73 and a three-dimensional (3D) camera 74. The vehicle can further include various controllers or vehicle systems that are adapted to affect the behaviour of the vehicle responsive to a classification of a traffic sign as performed by the device 71. Examples for such controllers or vehicle systems may include antilock brake systems (ABS), traction control systems (PCS), and electronic stability programs (ESP).

The 2D camera 73 is adapted to capture images of an environment of a vehicle in which the device 71 is installed. The 2D camera may include a charge coupled device (CCD) sensor or another sensor adapted to receive electromagnetic radiation and to provide image data representing an image of the environment of the vehicle to the processor 72. The image captured by the 2D camera includes, for a plurality of image pixels, at least a greyscale value or a colour-tuple that is convertible to greyscale or brightness information.

The 3D camera 74 is adapted to capture a 3D image of the environment of the vehicle. A 3D image is a depth map of the field of view (FOV) of the 3D camera 74. The depth map includes distance information for a plurality of directions in the FOV of the 3D camera, mapped onto the pixels of the 3D image. The 3D camera 74 has a FOV overlapping with a FOV of the 2D camera 73. The 3D camera 74 may include a time of flight (TOF) sensor, e.g., a Photonic Mixer Device (PDM) sensor. While the device 71 is shown to have a 3D camera 74, which may be utilized in identifying a portion of the image data provided by the 2D camera that corresponds to a traffic sign, the 3D camera may be omitted in other embodiments.

The classification data base 75 includes data 76 which allows the processor 72 to evaluate a decision function using a set of orthogonal vectors stored in the classification data base 75, as schematically indicated at 77. Each one of the vectors of the set has M vector components, and the set of orthogonal vectors includes M or less vectors. The decision function may, for example, be of the form given in Equation (19) or (20). In addition to the set of orthogonal vectors, the data 76 may include a numerical value associated with each one of the orthogonal vectors, which corresponds to or is proportional to the pre-factor in the sum of Equation (19) or (20). For illustration, the information 76 may include data 78 representing the values $\lambda_j$ associated with the different orthogonal vectors for use as prefactors in evaluating the decision function, such as the decision function of Equation (19) or Equation (20). The data 76 may include data 79 which represents additional information for use in evaluating the decision function, such as the value of the constant offset term b which may be used in the decision function of some embodiments. The data 79 does not need to be provided. It will also be appreciated that, at least for certain types of kernels K, such as the homogeneous polynomial kernels of Equation (6), the eigenvectors $\vec{z}_i$ may also be renormalized in dependence of the eigenvalues $\lambda_j$ (for example by multiplication with $(\lambda_j/\|\vec{z}\|^2)^{1/p}$ with p being the order of the polynomial kernel function) such that it is not required to store the parameters $\lambda_j$ in the decision data base.

When multi class classification for more than three classes is to be performed, the decision data base 75 may further include data 80 which generally includes similar data as the data 76, but determined with regard to a different selected class. For illustration, as has been explained with reference to Fig. 3, the data 75 may include a first set of orthogonal vectors each having M vector components. The vectors of the first set may be eigenvectors of the matrix of Equation (13) with $y_i$ being set to a first value when the i$^{th}$ eigenvector belongs to a first class and being set to a second value otherwise. The vectors of the second set may be eigenvectors of the matrix of Equation (13) with $y_i$ being set to a first value when the i$^{th}$ eigenvector belongs to a second class and being set to a second value otherwise. Similarly, further sets of vectors may be provided, and the vectors of the g$^{th}$ set may be eigenvectors of the matrix of Equation (13) with $y_i$ being set to the first value when the i$^{th}$ eigenvector belongs to a g$^{th}$ class of the plurality of classes and being set to the second value otherwise.

For illustration rather than limitation, different classes may correspond to "end of restriction signs", "restriction sign having two numerical digits", "restriction sign having three numerical digits", and "other restriction signs".

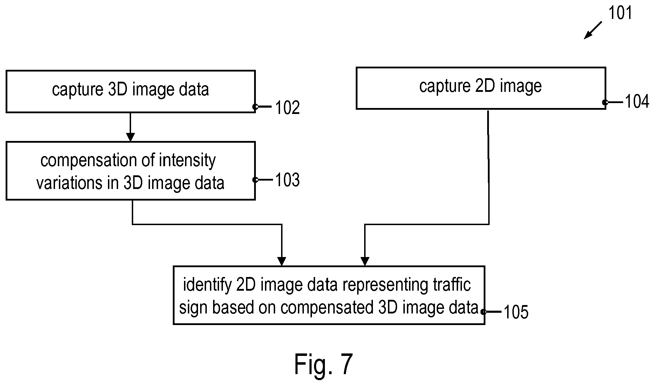

In operation of the device 71, the processor 72 receives an image from the 2D camera 73. The processor 72 may be configured to perform an image segmentation to identify a portion of the image data which corresponds to a traffic sign. The processor 72 may perform the segmentation based on 3D image data provided by the 3D camera 74, as will be described in more detail with reference to Fig. 7. The processor 72 determines a feature vector having M vector components for the image data. The processor 72 evaluates a decision function based on the determined feature vector and based on one set of vectors stored in the decision data base. For multiclass classification, the processor 72 may evaluate the decision function several times, respectively using different sets of orthogonal vectors.

The decision function may be computed according to Equation (19) or Equation (20). For illustration rather than limitation, the processor may retrieve $N_r$ orthogonal vectors $\vec{z}_j$ and associated coefficients $\lambda_j$ and may evaluate Equation (20). If the kernel K is a homogeneous quadratic polynomial, the processor 72 may compute

$$\sum_{j=1}^{N_r} \frac{\lambda_j}{\left\| \vec{z}_j \right\|^2} \cdot \left( \vec{F} \circ \vec{z}_j \right)^2 + b \, , \qquad (24)$$

with the values for $\lambda_j$ and b and the orthogonal vectors $\vec{z}_j$ retrieved from the classification data base 75. The numerical value obtained by evaluating Equation (24) indicates the class when there are only two classes. If there are more than two classes, the processor may, in one embodiment, evaluate Equation (24) for the different sets of vectors and associated values for $\lambda_j$ stored in the classification data base 75. In the latter case, a maximum or minimum value obtained when evaluating Equation (24) for different sets of vectors may indicate the class to which the traffic sign belongs.

Fig. 6 is a flow diagram of a method 91 of classifying traffic signs according to an embodiment. The method may be performed by the processor 72 of the device 71. The method may be performed onboard a vehicle.

At 92, image data are retrieved. The image data may be received from a 2D camera or may be obtained by processing an image provided by a 2D camera installed onboard a vehicle.

At 93, a feature vector is determined for the image data. The feature vector may be determined according to any one of a variety of ways. For illustration, in one implementation, grayscale pixel values of the image data may be used as vector components of the feature vector. In another implementation, more complex descriptors may be used to generate a SIFT-, SURF-, RIFT- G-RIF-, PCA-SIFT-GLOH- or other feature vector. The feature vector is determined such that it has M vector components.

At 94, a set of orthogonal vectors is retrieved from a classification data base. Each one of the orthogonal vectors has M vector components, i.e., is defined in an M-dimensional feature descriptor space.

At 95, a decision function is evaluated based on the feature vector determined at 93 and the set of vectors retrieved from the classification data base at 94. Evaluating the decision function may be performed by evaluating a function as given in Equation (24). In other embodiments, a decision function having a kernel other than the quadratic kernel shown in Equation (24) may be used.

At 96, the traffic sign is classified in accordance with the value obtained at 95. For illustration, the value obtained at 95 may be compared to a predetermined threshold value to determine whether the traffic sign belongs to a first class or to a second class. For multi class classification, the decision function is evaluated for plural different sets of orthogonal vectors, and the class of the traffic sign may be determined by identifying the set of vectors for which the decision function has an extremum value.

The determined class of the traffic sign may be provided to other processes or devices installed in the vehicle. In other embodiments, information on the classification of the traffic sign may be stored in a digital map.

Additional steps may be implemented in the method 95 of Fig. 6. For illustration, a pre-classification may be performed which is independent of the classification data base. The pre-classification may, for example, be such that it is determined whether the traffic sign is circular or not. Various methods are known for implementing such image analysis functions, which may be based, for example, on a circular Hough transformation or similar.

As mentioned above, the device 71 may perform an image segmentation to identify image data which represents a traffic sign. A procedure which may be performed by the device 71 will be described with reference to Fig. 7.

Fig. 7 shows a procedure 101 for identifying image data which represents a traffic sign. The procedure 101 may be used in step 92 of the method 91 of Fig. 6.

At 102, 3D image data are captured. The 3D image data may be captured using a PMD camera.

At 103, the intensity values of the 3D image data are subject to a mathematical operation to compensate intensity variations which are caused by varying viewing directions. It has been found that PMD images show an intensity variation which is caused by the variation in viewing direction relative to the optical axis of the PMD camera. More specifically, the intensity recorded by the PMD is attenuated at locations offset from the image center by the increasing side look angle. The variation of the intensity with the angle (which may be defined to be the angle between the viewing direction associated with a particular pixel and the optical axis of the PMD camera) is non-linear. Generally, the variation in intensity which can be attributed to the varying angle may be approximated to be an exponential function. For a given PMD camera, the variation in intensity caused by the varying viewing direction can, at least partially, be compensated. For illustration, the intensity values recorded at various pixels may be multiplied by a factor which is an increasing exponential function of the distance of the associated pixel from the image center.

At 104, a 2D image is captured.

At 105, an image segmentation of the 2D image is performed to identify image data which represent a traffic sign. The image data may then optionally be supplied to a pre-classification, for example in order to determine whether the traffic sign is circular or not. The image data are then classified using the steps described with reference to Fig. 6.

While embodiments of the invention have been described with reference to the drawings, various modifications and alterations may be implemented in other embodiments. For illustration, while methods and devices have been described which use a specific kernel function, in particular a homogeneous quadratic kernel, other kernel functions may be used. For further illustration, while embodiments have been described in which one set of orthogonal vectors is determined by diagonalization of a symmetric matrix and stored in a classification data base, plural such sets may be determined for performing multi class classification.

While it is expected that embodiments of the invention may be advantageously utilized in image recognition performed onboard a vehicle, the application of embodiments is not limited thereto. Rather, embodiments of the invention may be used in any system or application in which it is desirable or required to classify traffic signs.

**Claims**

1. A method of generating a classification data base (7; 75) for classifying a traffic sign into one of a plurality of classes, said method comprising:

   retrieving a parameter set (3) of a trained support vector machine, said retrieved parameter set (3) including

   a plurality of support vectors (4), each one of said support vectors (4) respectively belonging to one of said plurality of classes; and
   a plurality of weighting factors (5), each one of said weighting factors (5) being associated with one of said support vectors (4); **characterized in that** the method further comprises:

   generating a symmetric or hermitian matrix based on said retrieved parameter set (3), said matrix having a number of rows and number of columns which is respectively smaller than a number, N, of said plurality of support vectors (4), a plurality of matrix elements of said matrix being respectively computed as a function of said parameter set (3);
   determining a plurality of orthogonal eigenvectors of said matrix; and
   storing at least a sub set of said plurality of eigenvectors in said classification data base (7; 75), wherein only a part of the eigenvectors having eigenvalues with the greatest modulus are selected for storing in the classification data base (7; 75), and wherein a number of eigenvectors which is to be stored in the classification data base (7; 75) is selected by testing the operation of a classification performed using the sub set of eigenvectors against a desired performance criterion.

2. The method of claim 1,
   wherein each one of said plurality of support vectors (4) has M vector components, with M being less than N,
   wherein said matrix is generated to have M rows and M columns, and wherein M orthogonal eigenvectors of said matrix are determined.

3. The method of claim 1 or 2,
   wherein said matrix has matrix elements $S_{uv}$ with integer $u>0$ and $v>0$, wherein for a plurality of said matrix elements, said matrix element is computed according to

$$S_{uv} = \sum_{i=1}^{N} w_i \cdot X_{i,u} \cdot X_{i,v} \, ,$$

with i being a support vector label, wherein, for all i, $w_i$ is a function of the retrieved weighting factor associated with the $i^{th}$ support vector $\vec{X}_i$, $X_{i,u}$ is the $u^{th}$ component of the $i^{th}$ support vector $\vec{X}_i$, and $X_{i,v}$ is the $v^{th}$ component of the $i^{th}$

support vector $\vec{X}_i$.

4. The method of any one of the preceding claims,
wherein generating said matrix includes computing

$$\sum_{i=1}^{N} w_i \cdot \vec{X}_i \cdot \vec{X}_i^{T} \,,$$

with i being a support vector label, wherein, for all i, wi is a function of the retrieved weighting factor associated with the $i^{th}$ support vector $\vec{X}_i$, $\vec{X}_i$ is the $i^{th}$ support vector in column vector form and $\vec{X}_i^{T}$ is the $i^{th}$ support vector in row vector form.

5. The method of claim 3 or claim 4,
wherein

$$w_i = \alpha_i \cdot y_i,$$

wherein, for all i, $\alpha_i$ is said weighting factor associated with the $i^{th}$ support vector $\vec{X}_i$, $y_i$ is set to have a first value if said $i^{th}$ support vector belongs to a selected class of said plurality of classes and yi is set to have a second value if said $i^{th}$ support vector does not belong to said selected class of said plurality of classes.

6. The method of claim 5, said plurality of classes comprising at least three different classes, said method further comprising
generating a further symmetric matrix, wherein said generating said further matrix includes computing

$$\sum_{i=1}^{N} \alpha_i \cdot y_i^{(II)} \cdot \vec{X}_i \cdot \vec{X}_i^{T} \,,$$

wherein, for all i, $\alpha_i$ is said weighting factor associated with the $i^{th}$ support vector $\vec{X}_i$, $y_i^{(II)}$ is set to have said first value if said $i^{th}$ support vector belongs to a further selected class of said plurality of classes, said further selected class being different from said selected class, and $y_i^{(II)}$ is set to have said second value if said $i^{th}$ support vector does not belong to said further selected class of said plurality of classes.

7. The method of any one of the preceding claims, comprising receiving a target reliability information,
performing a test classification as a function of a sample set of said determined eigenvectors, the sample set being selected based on the eigenvalues of the eigenvectors,
determining a success rate of said test classification,
comparing said determined success rate to said target reliability information, and
selectively repeating said performing said test classification with a different sample set of said eigenvectors based on a result of said comparing.

8. A device for classifying a traffic sign into one of a plurality of classes, said device (71) comprising
a processor (72) configured to receive image data representing said traffic sign and to determine a feature vector for said image data, said feature vector having an integer number M of components, and
a classification data base (75) as generated by the method of claim 1 having stored therein a set of vectors (76), each one of said vectors of said set (76) having M vector components,
said processor (72) being coupled to said classification data base (75) and being configured to retrieve said set of vectors from said classification data base (75) and to evaluate a decision function as a function of said determined feature vector and said set of vectors stored in said classification data base (75),
**characterized in that**
said vectors of said set (76) are mutually orthogonal;
a number of said vectors of said set is less than M; and
said vectors are eigenvectors of a symmetric or hermitian matrix which have eigenvalues with greatest modulus, wherein the symmetric or hermitian matrix has been generated based on a parameter set including a plurality of N support vectors, each one of the support vectors respectively belonging to one of said plurality of classes, and including a plurality of weighting factors, each one of said weighting factors being associated with one of said support vectors, said matrix having a number of rows and a number of columns which is respectively smaller than the number of N support vectors, a plurality of matrix elements of said matrix being respectively computed as a function of the plurality of support vectors and a plurality of weighting factors.

9. The device of claim 8,
said set of vectors including vectors $\vec{z}_j$ with j being a vector label, said processor being configured to compute, for a plurality of said vectors $\vec{z}_j$, a kernel function $K(\vec{F},\vec{z}_j)$, where $\vec{F}$ denotes the feature vector determined for said image data.

10. The device of claim 9,
wherein said kernel function $K(\vec{F},\vec{z}_j)$ is proportional to $(\vec{F} \circ \vec{z}_j)^{2 \cdot c}$, with c being an integer greater than 0.

11. The device of any one of claims 8-10,
said classification data base (75) having stored therein a further set of vectors, each one of said vectors of said further set having M vector components, said vectors of said further set being mutually orthogonal,
said processor (72) being configured to retrieve said further set of vectors from said classification data base (75) and to evaluate said decision function as a function of both said determined feature vector and said further set of vectors stored in said classification data base (75).

12. The device of any one of claims 8-11,
comprising a 3D camera (74), in particular a PMD camera (74), coupled to said processor (72) to provide 3D image data thereto,
said processor (72) being configured to perform an image segmentation based on said 3D image data to identify said image data representing said traffic sign.

13. The device of claim 12,
said processor (72) being configured to generate compensated 3D image data by applying a compensation function to intensity values of said 3D image data, said compensation function varying non-linearly as a function of pixel coordinates.

14. A method of classifying a traffic sign into one of a plurality of classes, said method comprising
receiving image data representing said traffic sign,
determining a feature vector for said image data, said feature vector having an integer number M of components,
retrieving, from a classification data base (7; 75), as generated by the method of claim 1, a set of vectors, each one of said vectors of said set having M vector components, and
evaluating a decision function as a function of both said determined feature vector and said retrieved set of vectors,
**characterized in that**
said vectors of said set (76) are mutually orthogonal;
a number of said vectors of said set is less than M; and
said vectors are eigenvectors of a symmetric or hermitian matrix which have eigenvalues with greatest modulus, wherein the symmetric or hermitian matrix has been generated based on a parameter set including a plurality of N support vectors, each one of the support vectors respectively belonging to one of said plurality of classes, and including a plurality of weighting factors, each one of said weighting factors being associated with one of said support vectors, said matrix having a number of rows and a number of columns which is respectively smaller than the number of N support vectors, a plurality of matrix elements of said matrix being respectively computed as a function of the plurality of support vectors and a plurality of weighting factors.

**Patentansprüche**

1. Verfahren zur Erzeugung einer Klassifizierungsdatenbank (7; 75) zur Klassifizierung eines Verkehrsschildes in eine einer Vielzahl von Klassen, wobei das Verfahren Folgendes umfasst:

   Abrufen eines Parametersatzes (3) einer trainierten Support-Vektor-Maschine, wobei der abgerufene Parametersatz (3) Folgendes beinhaltet
   eine Vielzahl von Support-Vektoren (4), wobei jeder der Support-Vektoren (4) jeweils zu einer der Vielzahl von Klassen gehört; und
   eine Vielzahl von Gewichtungsfaktoren (5), wobei jeder der Gewichtungsfaktoren (5) mit einem der Support-Vektoren (4) assoziiert ist;

   **dadurch gekennzeichnet, dass** das Verfahren ferner Folgendes umfasst:

   Erzeugen einer symmetrischen oder hermitischen Matrix auf Grundlage des abgerufenen Parametersatzes (3), wobei die Matrix eine Anzahl von Zeilen und eine Anzahl von Spalten aufweist, die jeweils kleiner ist als eine Anzahl, N, der Vielzahl von Support-Vektoren (4), wobei eine Vielzahl von Matrixelementen der Matrix jeweils als eine Funktion des Parametersatzes (3) berechnet wird;
   Bestimmen einer Vielzahl von orthogonalen Eigenvektoren der Matrix; und
   Speichern von mindestens einem Teilsatz der Vielzahl von Eigenvektoren in der Klassifizierungsdatenbank (7; 75), wobei nur ein Teil der Eigenvektoren, die Eigenwerte mit dem größten Modul aufweisen, zum Speichern in der Klassifizierungsdatenbank (7; 75) ausgewählt ist, und wobei eine Anzahl von Eigenvektoren, die in der Klassifizierungsdatenbank (7; 75) gespeichert werden soll, ausgewählt ist durch Testen des Vorgangs einer Klassifizierung, der unter Verwendung des Teilsatzes der Eigenvektoren gegen ein gewünschtes Leistungskriterium durchgeführt wird.

2. Verfahren nach Anspruch 1, wobei jeder der Vielzahl von Support-Vektoren (4) M Vektorenkomponenten aufweist, wobei M kleiner ist als N,
   wobei die Matrix derart erzeugt ist, dass sie M Zeilen und M Spalten aufweist und,
   wobei M orthogonale Eigenvektoren der Matrix bestimmt sind.

3. Verfahren nach Anspruch 1 oder 2,
   wobei die Matrix Matrixelemente $S_{uv}$ mit einer Ganzzahl u>0 und v>0 aufweist,
   wobei für eine Vielzahl der Matrixelemente, das Matrixelement gemäß Folgendem berechnet wird

$$S_{uv} = \sum_{i=1}^{N} w_i \cdot X_{i,u} \cdot X_{i,v} \, ,$$

   wobei i eine Support-Vektor-Kennzeichnung ist, wobei, für alle i, $w_i$ eine Funktion des abgerufenen Gewichtungsfaktors ist, der mit dem i-ten Support-Vektor $\vec{X}_i$ assoziiert ist, $X_{i,u}$ die u-te Komponente des i-ten Support-Vektors $\vec{X}_i$. ist und $X_{i,v}$ die v-te Komponente des i-ten Support-Vektors $\vec{X}_i$ ist.

4. Verfahren nach einem der vorhergehenden Ansprüche,
   wobei das Erzeugen der Matrix Berechnen des Folgenden beinhaltet

$$\sum_{i=1}^{N} w_i \cdot \vec{X}_i \cdot \vec{X}_i^T \, ,$$

   wobei i eine Support-Vektor-Kennzeichnung ist, wobei, für alle i, $w_i$ eine Funktion des abgerufenen Gewichtungsfaktors ist, der mit dem i-ten Support-Vektor $\vec{X}_i$ assoziiert ist, wobei $\vec{X}_i$ der i-te Support-Vektor in der Spaltenvektorform ist und $\vec{X}_i^T$ der i-te Support-Vektor in der Zeilenvektorform ist.

5. Verfahren nach Anspruch 3 oder Anspruch 4,
wobei

$$w_i = \alpha_i \cdot y_i,$$

wobei für jeden i, $\alpha_i$ ein Gewichtungsfaktor ist, der mit dem i-ten Support-Vektor $\vec{X}_i$ assoziiert ist, wobei $y_i$ eingestellt ist, einen ersten Wert aufzuweisen, falls der i-te Support-Vektor zu einer ausgewählten Klasse der Vielzahl von Klassen gehört, und $y_i$ eingestellt ist, einen zweiten Wert aufzuweisen, wenn der i-te Support-Vektor nicht zu der ausgewählten Klasse der Vielzahl von Klassen gehört.

6. Verfahren nach Anspruch 5, wobei die Vielzahl von Klassen mindestens drei unterschiedliche Klassen umfasst, wobei das Verfahren ferner Folgendes umfasst
Erzeugen einer weiteren symmetrischen Matrix, wobei das Erzeugen der weiteren Matrix Berechnen des Folgenden umfasst

$$\sum_{i=1}^{N} \alpha_i \cdot y_i^{(II)} \cdot \vec{X}_i \cdot \vec{X}_i^T ,$$

wobei, für alle i, $\alpha_i$ der Gewichtungsfaktor ist, der mit dem i-ten Support-Vektor $\vec{X}_i$ assoziiert ist, wobei $y_i^{(II)}$ eingestellt ist, den ersten Wert aufzuweisen, falls der i-te Support-Vektor zu einer weiteren ausgewählten Klasse der Vielzahl von Klassen gehört, wobei sich die weitere ausgewählte Klasse von der ausgewählten Klasse unterscheidet, und $y_i^{(II)}$ eingestellt ist, den zweiten Wert aufzuweisen, falls der i-te Support-Vektor nicht zu einer weiteren ausgewählten Klasse der Vielzahl von Klassen gehört.

7. Verfahren nach einem der vorhergehenden Ansprüche, das Folgendes umfasst
Empfangen einer Zielzuverlässigkeitsinformation,
Durchführen einer Testklassifizierung als eine Funktion eines Probensatzes der bestimmten Eigenvektoren, wobei der Probensatz auf Grundlage der Eigenwerte der Eigenvektoren ausgewählt ist, Bestimmen einer Erfolgsrate der Testklassifizierungen, Vergleichen der bestimmten Erfolgsrate mit der Zielzuverlässigkeitsinformation, und selektives Wiederholen des Durchführens der Testklassifizierung mit einem unterschiedlichen Probensatz der Eigenvektoren auf Grundlage eines Ergebnisses des Vergleichens.

8. Vorrichtung zur Klassifizierung eines Verkehrsschildes in eine einer Vielzahl von Klassen, wobei die Vorrichtung (71) Folgendes umfasst
einen Prozessor (72), der konfiguriert ist, Bilddaten zu empfangen, die das Verkehrsschild darstellen, und einen Merkmalvektor für die Bilddaten zu bestimmen, wobei der Merkmalvektor eine Ganzzahl M von Komponenten aufweist, und eine Klassifizierungsdatenbank (75), wie durch das Verfahren nach Anspruch 1 erzeugt, die darin einen Satz von Vektoren (76) gespeichert aufweist, wobei jeder der Vektoren des Satzes (76) M Vektorkomponenten aufweist, wobei der Prozessor (72) an die Klassifizierungsdatenbank (75) gekoppelt ist und konfiguriert ist, den Satz von Vektoren aus der Klassifizierungsdatenbank (75) abzurufen und eine Entscheidungsfunktion als eine Funktion des bestimmten Merkmalvektors und des Satzes von Vektoren, die in der Klassifizierungsdatenbank (75) gespeichert sind, zu bewerten,
**dadurch gekennzeichnet, dass**
die Vektoren des Satzes (76) orthogonal zueinander sind;
eine Anzahl der Vektoren des Satzes kleiner als M ist; und
die Vektoren Eigenvektoren einer symmetrischen oder hermitischen Matrix sind, die Eigenwerte mit dem größten Modul aufweisen, wobei die symmetrische oder hermitische Matrix auf Grundlage eines Parametersatzes erzeugt wurde, der eine Vielzahl von N Support-Vektoren beinhaltet, wobei jeder der Support-Vektoren jeweils zu einer der Vielzahl von Klassen gehört, der eine Vielzahl von Gewichtungsfaktoren beinhaltet, wobei jeder der Gewichtungsfaktoren mit einem der Support-Vektoren assoziiert ist, wobei die Matrix eine Anzahl von Zeilen und eine Anzahl von Spalten aufweist, die jeweils kleiner ist als die Anzahl von N Support-Vektoren, wobei eine Vielzahl von Matrixelementen der Matrix jeweils als eine Funktion der Vielzahl von Support-Vektoren und einer Vielzahl von Gewichtungsfaktoren berechnet ist.

**9.** Vorrichtung nach Anspruch 8,
wobei der Satz von Vektoren die Vektoren $\vec{z}_j$ beinhaltet, wobei j eine Vektor-Kennzeichnung ist, wobei der Prozessor konfiguriert ist, für eine Vielzahl der Vektoren $\vec{z}_j$ eine Kernfunktion $K(\vec{F},\vec{z}_j)$ zu berechnen, wobei $\vec{F}$ den Merkmalvektor bezeichnet, der für die Bilddaten bestimmt ist.

**10.** Vorrichtung nach Anspruch 9,
wobei die Kernfunktion $K(\vec{F},\vec{z}_j)$ proportional zu $(\vec{F} \circ \vec{z}_j)^{2 \cdot c}$ ist, wobei c eine Ganzzahl größer als 0 ist.

**11.** Vorrichtung nach einem der Ansprüche 8-10,
wobei die Klassifizierungsdatenbank (75) einen weiteren Satz von Vektoren darin gespeichert aufweist, wobei jeder der Vektoren des weiteren Satzes M Vektorkomponenten aufweist, wobei die Vektoren des weiteren Satzes orthogonal zueinander sind, wobei der Prozessor (72) dazu konfiguriert ist, den weiteren Satz von Vektoren aus der Klassifizierungsdatenbank (75) abzurufen, und die Entscheidungsfunktion als eine Funktion von sowohl dem bestimmten Merkmalvektor als auch dem weiteren Satz von Vektoren, die in der Klassifizierungsdatenbank (75) gespeichert sind, zu bewerten.

**12.** Vorrichtung nach einem der Ansprüche 8-11,
die eine 3D-Kamera (74) umfasst, insbesondere eine PMD-Kamera (74), die an den Prozessor (72) gekoppelt ist, um 3D-Bilddaten dafür bereitzustellen,
wobei der Prozessor (72) konfiguriert ist, eine Bildsegmentierung auf Grundlage der 3D-Bilddaten durchzuführen, um die Bilddaten zu identifizieren, die das Verkehrsschild darstellen.

**13.** Vorrichtung nach Anspruch 12,
wobei der Prozessor (72) konfiguriert ist, kompensierte 3D-Bilddaten durch Anwenden einer Kompensationsfunktion auf Intensitätswerte der 3D-Bilddaten zu erzeugen, wobei die Kompensationsfunktion als eine Funktion von Pixelkoordinaten nicht linear variiert.

**14.** Verfahren zur Klassifizierung eines Verkehrsschildes in eine einer Vielzahl von Klassen, wobei das Verfahren Folgendes umfasst
Empfangen von Bilddaten, die das Verkehrsschild darstellen, Bestimmen eines Merkmalvektors für die Bilddaten, wobei der Merkmalvektor eine Ganzzahl M von Komponenten aufweist, Abrufen, aus einer Klassifizierungsdatenbank (7; 75), wie durch das Verfahren nach Anspruch 1 erzeugt, eines Satzes von Vektoren, wobei jeder der Vektoren des Satzes M VektorKomponenten aufweist, und
Bewerten einer Entscheidungsfunktion als eine Funktion von sowohl dem bestimmten Merkmalvektor als auch dem abgerufenen Satz von Vektoren,
**dadurch gekennzeichnet, dass**
die Vektoren des Satzes (76) orthogonal zueinander sind;
eine Anzahl der Vektoren des Satzes kleiner ist als M; und
die Vektoren Eigenvektoren einer symmetrischen oder hermitischen Matrix sind, die Eigenwerte mit größtem Modul aufweisen, wobei die symmetrische oder hermitische Matrix auf Grundlage eines Parametersatzes erzeugt wurde, der eine Vielzahl von N Support-Vektoren beinhaltet, wobei jeder der Support-Vektoren jeweils zu einer der Vielzahl von Klassen gehört, und der einer Vielzahl von Gewichtungsfaktoren beinhaltet, wobei jeder der Gewichtungsfaktoren mit einem der Support-Vektoren assoziiert ist, wobei die Matrix eine Anzahl von Zeilen und eine Anzahl von Spalten aufweist, die jeweils kleiner ist als die Anzahl von N Support-Vektoren, wobei eine Vielzahl von Matrixelementen der Matrix jeweils als eine Funktion der Vielzahl von Support-Vektoren und einer Vielzahl von Gewichtungsfaktoren berechnet ist.

**Revendications**

**1.** Procédé de génération d'une base de données de classement (7 ; 75) pour classer un panneau de signalisation routière dans une pluralité de classes, ledit procédé comprenant :

la récupération d'un ensemble de paramètres (3) d'une machine à vecteurs de support entraînée, ledit ensemble de paramètres récupéré (3) comportant
une pluralité de vecteurs de support (4), chacun desdits vecteurs de support (4) appartenant respectivement à une de ladite pluralité de classes ; et

une pluralité de facteurs de pondération (5), chacun desdits facteurs de pondération (5) étant associé à un desdits vecteurs de support (4) ;

**caractérisé en ce que** le procédé comprend en outre :

la génération d'une matrice symétrique ou hermitienne sur la base de l'ensemble de paramètres récupéré (3), ladite matrice ayant un nombre de lignes et un nombre de colonnes qui est respectivement plus petit qu'un nombre, N, de ladite pluralité de vecteurs de support (4), une pluralité d'éléments de matrice de ladite matrice étant calculés respectivement en fonction dudit ensemble de paramètres (3) ;
la détermination d'une pluralité de vecteurs propres orthogonaux de ladite matrice ; et
le stockage d'au moins un sous-ensemble de ladite pluralité de vecteurs propres dans ladite base de données de classement (7 ; 75), dans lequel seulement une partie des vecteurs propres ayant des valeurs propres avec le module le plus grand sont sélectionnés pour un stockage dans la base de données de classement (7 ; 75), et dans lequel un nombre de vecteurs propres qui est à stocker dans la base de données de classement (7 ; 75) est sélectionné en testant le fonctionnement d'un classement réalisé en utilisant le sous-ensemble de vecteurs propres par rapport à un critère de performances souhaitées.

2. Procédé selon la revendication 1,
dans lequel chacun de ladite pluralité de vecteurs de support (4) a M composantes de vecteur, M étant plus petit que N,
dans lequel ladite matrice est générée pour avoir M lignes et M colonnes, et
dans lequel M vecteurs propres orthogonaux de ladite matrice sont déterminés.

3. Procédé selon la revendication 1 ou 2,
dans lequel ladite matrice a des éléments de matrice $S_{uv}$ avec des entiers $u > 0$ et $v > 0$,
dans lequel pour une pluralité desdits éléments de matrice, ledit élément de matrice est calculé selon

$$S_{uv} = \sum_{i=1}^{N} w_i \cdot X_{i,u} \cdot X_{i,v} \quad,$$

i étant une étiquette de vecteur de support, dans lequel, pour tous les i, $w_i$ est une fonction du facteur de pondération récupéré associé au $i^{\text{ème}}$ vecteur de support $\vec{X}_i$, $X_{iu}$ est le $u^{\text{ème}}$ vecteur de support $\vec{X}_i$, et $X_{i,v}$ est la $V^{\text{ème}}$ composante du $i^{\text{ème}}$ vecteur de support $\vec{X}_i$.

4. Procédé selon l'une quelconque des revendications précédentes,
dans lequel la génération de ladite matrice comporte le calcul de

$$\sum_{i=1}^{N} w_i \cdot \vec{X}_i \cdot \vec{X}_i^T \quad,$$

i étant une étiquette de vecteur de support, dans lequel, pour tous les i, $w_i$ est une fonction du facteur de pondération récupéré associé au $i^{\text{ème}}$ vecteur de support $\vec{X}_i$, $\vec{X}_i$ est le $i^{\text{ème}}$ vecteur de support sous forme de vecteur de colonne et $\vec{X}_i^T$ est le $i^{\text{ème}}$ vecteur de support sous forme de vecteur de ligne.

5. Procédé selon la revendication 3 ou la revendication 4, dans lequel

$$w_i = \alpha_i \cdot y_i,$$

dans lequel, pour tous les i, $\alpha_i$ est ledit facteur de pondération associé au $i^{\text{ème}}$ vecteur de support $\vec{X}_i$, $y_i$ est établi

pour avoir une première valeur si ledit i$^{\text{ème}}$ vecteur de support appartient à une classe sélectionnée de ladite pluralité de classes et y$_i$ est établi pour avoir une seconde valeur si ledit i$^{\text{ème}}$ vecteur de support n'appartient pas à ladite classe sélectionnée de ladite pluralité de classes.

6. Procédé selon la revendication 5, ladite pluralité de classes comprenant au moins trois classes différentes, ledit procédé comprenant en outre
la génération d'une matrice symétrique supplémentaire, dans lequel ladite génération de ladite matrice supplémentaire comporte le calcul de

$$\sum_{i=1}^{N} \alpha_i \cdot y_i^{(II)} \cdot \vec{X}_i \cdot \vec{X}_i^{T},$$

dans lequel, pour tous les i, $\alpha_i$ est ledit facteur de pondération associé au i$^{\text{ème}}$ vecteur de support $\vec{X}_i$, $y_i^{(II)}$ est établi pour avoir ladite première valeur si ledit i$^{\text{ème}}$ vecteur de support appartient à une classe sélectionnée supplémentaire de ladite pluralité de classes, ladite classe sélectionnée supplémentaire étant différente de ladite classe sélectionnée, et $y_i^{(II)}$ est établi pour avoir ladite seconde valeur si ledit i$^{\text{ème}}$ vecteur de support n'appartient pas à ladite classe sélectionnée supplémentaire de ladite pluralité de classes.

7. Procédé selon l'une quelconque des revendications précédentes, comprenant
la réception d'informations de fiabilité cibles,
la réalisation d'un classement test en fonction d'un ensemble échantillon desdits vecteurs propres déterminés, l'ensemble échantillon étant sélectionné sur la base des valeurs propres des vecteurs propres,
la détermination d'un taux de réussite dudit classement test,
la comparaison dudit taux de succès déterminé avec lesdites informations de fiabilité cibles, et
la répétition sélective de ladite réalisation dudit classement test avec un ensemble échantillon différent desdits vecteurs propres sur la base d'un résultat de ladite comparaison.

8. Dispositif pour classer un panneau de signalisation routière dans une d'une pluralité de classes, ledit dispositif (71) comprenant
un dispositif de traitement (72) configuré pour recevoir des données d'image représentant ledit panneau de signalisation routière et pour déterminer un vecteur de caractéristique pour lesdites données d'image, ledit vecteur de caractéristique ayant un nombre entier M de composantes, et
une base de données de classement (75) telle que générée par le procédé de la revendication 1 ayant, stockée dans celle-ci, un ensemble de vecteurs (76),
chacun desdits vecteurs dudit ensemble (76) ayant M composantes de vecteur,
ledit dispositif de traitement (72) étant couplé à ladite base de données de classement (75) et étant configuré pour récupérer ledit ensemble de vecteurs à partir de ladite base de données de classement (75) et pour évaluer une fonction de décision en fonction dudit vecteur de caractéristique déterminé et dudit ensemble de vecteurs stocké dans ladite base de données de classement (75),
**caractérisé en ce que**
lesdits vecteurs dudit ensemble (76) sont réciproquement orthogonaux ;
un nombre desdits vecteurs dudit ensemble est plus petit que M ; et
lesdits vecteurs sont des vecteurs propres d'une matrice symétrique ou hermitienne qui ont des valeurs propres avec le module le plus grand, dans lequel la matrice symétrique ou hermitienne a été générée sur la base d'un ensemble de paramètres comportant une pluralité de N vecteurs de support, chacun des vecteurs de support appartenant respectivement à une de ladite pluralité de classes, et comportant une pluralité de facteurs de pondération, chacun desdits facteurs de pondération étant associé à un desdits vecteurs de support, ladite matrice ayant un nombre de lignes et un nombre de colonnes qui est respectivement plus petit que le nombre de N vecteurs de support, une pluralité d'éléments de matrice de ladite matrice étant calculés respectivement en fonction de la pluralité de vecteurs de support et d'une pluralité de facteurs de pondération.

9. Dispositif selon la revendication 8,

ledit ensemble de vecteurs comportant des vecteurs $\vec{z}_j$, j étant une étiquette de vecteur, ledit dispositif de traitement étant configuré pour calculer, pour une pluralité desdits vecteurs $\vec{z}_j$, une fonction noyau $K(\vec{F},\vec{z}_j)$, où $\vec{F}$ désigne le vecteur de caractéristique déterminé pour lesdites données d'image.

10. Dispositif selon la revendication 9,
dans lequel ladite fonction noyau $K(\vec{F},\vec{z}_j)$ est proportionnelle à $(\vec{F}\circ\vec{z})^{2\cdot c}$, c étant un entier plus grand que 0.

11. Dispositif selon l'une quelconque des revendications 8 à 10,
ladite base de données de classement (75) ayant, stocké dans celle-ci, un ensemble supplémentaire de vecteurs, chacun desdits vecteurs dudit ensemble supplémentaire ayant M composantes de vecteur, lesdits vecteurs dudit ensemble supplémentaire étant réciproquement orthogonaux,
ledit dispositif de traitement (72) étant configuré pour récupérer ledit ensemble supplémentaire de vecteurs à partir de ladite base de données de classement (75) et pour évaluer ladite fonction de décision en fonction à la fois dudit vecteur de caractéristique déterminé et dudit ensemble supplémentaire de vecteurs stocké dans ladite base de données de classement (75).

12. Dispositif selon l'une quelconque des revendications 8 à 11,
comprenant une caméra 3D (74), en particulier une caméra PMD (74), couplée audit dispositif de traitement (72) pour fournir des données d'image 3D à celui-ci,
ledit dispositif de traitement (72) étant configuré pour réaliser une segmentation d'image sur la base desdites données d'image 3D pour identifier lesdites données d'image 3D représentant ledit panneau de signalisation routière.

13. Dispositif selon la revendication 12,
ledit dispositif de traitement (72) étant configuré pour générer des données d'image 3D compensées en appliquant une fonction de compensation à des valeurs d'intensité auxdites données d'image 3D, ladite fonction de compensation variant de manière non linéaire en fonction de coordonnées de pixels.

14. Procédé de classement d'un panneau de signalisation routière dans une d'une pluralité de classes, ledit procédé comprenant
la réception de données d'image représentant ledit panneau de signalisation routière,
la détermination d'un vecteur de caractéristique pour lesdites données d'image, ledit vecteur de caractéristique ayant un nombre entier M de composantes,
la récupération, à partir d'une base de données de classement (7 ; 75), telle que générée par le procédé selon la revendication 1, d'un ensemble de vecteurs, chacun desdits vecteurs dudit ensemble ayant M composantes de vecteur, et
l'évaluation d'une fonction de décision en fonction à la fois dudit vecteur de caractéristique déterminé et dudit ensemble récupéré de vecteurs,
**caractérisé en ce que**
lesdits vecteurs dudit ensemble (76) sont réciproquement orthogonaux ;
un nombre desdits vecteurs dudit ensemble est inférieur à M ; et
lesdits vecteurs sont des vecteurs propres d'une matrice symétrique ou hermitienne qui ont des valeurs propres avec le module le plus grand, dans lequel la matrice symétrique ou hermitienne a été générée sur la base d'un ensemble de paramètres comportant une pluralité de N vecteurs de support, chacun des vecteurs de support appartenant respectivement à une de ladite pluralité de classes, et comportant une pluralité de facteurs de pondération, chacun desdits facteurs de pondération étant associé à un desdits vecteurs de support, ladite matrice ayant un nombre de lignes et un nombre de colonnes qui est respectivement plus petit que le nombre de N vecteurs de support, une pluralité d'éléments de matrice de ladite matrice étant calculés respectivement en fonction de la pluralité de vecteurs de support et d'une pluralité de facteurs de pondération.

Fig. 1

Fig. 2

41

| retrieve parameter set of trained SVM | —42 |

| generate a symmetric matrix S using support vectors | —43 |

| determine orthogonal eigenvectors of S | —44 |

| select at least a sub set of the determined eigenvectors | —45 |

| determine new weighting factors based on associated eigenvalues | —46 |

| store selected eigenvectors in classification data base | —47 |

Fig. 3

Fig. 4

Fig. 5

Fig. 6

101

| capture 3D image data | —102 |

| capture 2D image | —104 |

| compensation of intensity variations in 3D image data | —103 |

| identify 2D image data representing traffic sign based on compensated 3D image data | —105 |

## Fig. 7

## REFERENCES CITED IN THE DESCRIPTION

**Patent documents cited in the description**

- US 6134344 A

**Non-patent literature cited in the description**

- **KIRAN, C.G. ; PRABHU, L.V. ; ABDU, R.V. ; RAJEEV, K.** Traffic Sign Detection and Pattern Recognition using Support Vector Machine. *Seventh International Conference on Advances in Pattern Recognition, 2009. ICAPR '09,* 87-90
- Support vector machines for traffic signs recognition. **MIN SHI et al.** Neural Networks, 2008. IJCNN 2008. (IEEE World Congress on Computational Intelligence). IEEE, 3820-3827
- Real time pedestrian detection by fusing PMD and CMOS cameras. **NATROSHVILI K. et al.** Intelligent Vehicles Symposium, 2008 IEEE. IEEE, 925-929
- **BURGES C.J.C.** Simplified support vector decision rules. *Machine Learning. Proceedings of the International Conference,* 03 July 1996, 71-77
- **SCHÖLKOPF B. ; SMOLA A.J.** Learning with Kernels - Support Vector Machines, Regularization, Optimization, and Beyond. MIT press, 2002, 546-566
- A Tutorial on Support Vector Machines for Pattern Recognition. **C.J.C. BURGES.** Data Mining and Knowledge Discovery. Kluwer Academic Publishers, 1998, vol. 2, 121-167